(19) Europäisches Patentamt
European Patent Office
Office européen des brevets

(11) **EP 2 656 277 B1**

(12) **EUROPÄISCHE PATENTSCHRIFT**

(45) Veröffentlichungstag und Bekanntmachung des Hinweises auf die Patenterteilung:
**03.12.2014 Patentblatt 2014/49**

(21) Anmeldenummer: **11802937.0**

(22) Anmeldetag: **21.12.2011**

(51) Int Cl.:
***G06K 9/00*** *(2006.01)*

(86) Internationale Anmeldenummer:
**PCT/EP2011/073583**

(87) Internationale Veröffentlichungsnummer:
**WO 2012/085079 (28.06.2012 Gazette 2012/26)**

(54) **VORRICHTUNG UND VERFAHREN ZUR BESTIMMUNG VON OBJEKTEN IN EINER FARBAUFNAHME**

DEVICE AND METHOD FOR DETERMINING OBJECTS IN A COLOUR PHOTOGRAPH

DISPOSITIF ET PROCÉDÉ DE DÉTERMINATION D'OBJETS DANS UNE IMAGE EN COULEURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2010 DE 102010063965**

(43) Veröffentlichungstag der Anmeldung:
**30.10.2013 Patentblatt 2013/44**

(73) Patentinhaber: **Fraunhofer Gesellschaft zur Förderung der angewandten Forschung e.V. 80686 München (DE)**

(72) Erfinder:
• **ELTER, Matthias**
**91054 Erlangen (DE)**
• **ZERFASS, Thorsten**
**90408 Nürnberg (DE)**
• **STECKHAN, Dirk**
**81827 München (DE)**
• **WITTENBERG, Thomas**
**91054 Erlangen (DE)**
• **MÜNZENMAYER, Christian**
**91469 Hagenbüchach (DE)**
• **SCHLARB, Timo**
**55566 Kirschroth (DE)**

(74) Vertreter: **Schenk, Markus**
**Schoppe, Zimmermann, Stöckeler, Zinkler & Partner**
**P. O. Box 246**
**82043 Pullach (DE)**

(56) Entgegenhaltungen:
• **FAIK BORAY TEK ET AL: "Malaria Parasite Detection in Peripheral Blood Images", PROCEEDINGS OF THE BRITISH MACHINE VISION CONFERENCE 2006, 4. September 2006 (2006-09-04), Seiten 347-356, XP55034024, Edinburgh in der Anmeldung erwähnt**
• **FREAN JOHN A: "Reliable enumeration of malaria parasites in thick blood films using digital image analysis", MALARIA JOURNAL, BIOMED CENTRAL, LONDON, GB, Bd. 8, Nr. 1, 23. September 2009 (2009-09-23), Seite 218, XP021063207, ISSN: 1475-2875, DOI: 10.1186/1475-2875-8-218 in der Anmeldung erwähnt**
• **JEREMIE T ZOUEU ET AL: "Optical Microscope Based on Multispectral Imaging Applied to Plasmodium Diagnosis", JOURNAL OF APPLIED SCIENCES, Bd. 8, Nr. 15, 1. Januar 2008 (2008-01-01), Seiten 2711-2717, XP55034026, ISSN: 1812-5654**
• **DI RUBERTO, C.; A. DEMPSTER; S. KHAN; B. JARRA: "Analysis of infected blood cell images using morphological operators", IMAGE AND VISION COMPUTING, Bd. 20, Nr. 2, Februar 2002 (2002-02), Seiten 133-146, XP002680946, in der Anmeldung erwähnt**

**Beschreibung**

Technisches Gebiet der Erfindung

Ausführungsbeispiele der vorliegenden Erfindung schaffen eine Vorrichtung zur Bestimmung von Objekten in einer Farbaufnahme, wie sie beispielsweise zur Bestimmung von Plasmodien, beispielsweise in dicken Blutausstrichen, verwendet werden kann. Weitere Ausführungsbeispiele schaffen ein Verfahren zur Bestimmung von Objekten in einer Farbaufnahme, wie es beispielsweise zur Bestimmung von Plasmodien, beispielsweise in einem dicken Blutausstrich, verwendet werden kann.

Hintergrund der Erfindung

Malaria ist eine Tropenkrankheit, die durch die Infektion der roten Blutzellen (Erythrozyten) mit einzelligen Parasiten der Gattung Plasmodium hervorgerufen wird. Die Krankheit wird durch weibliche Stechmücken der Gattung Anopheles von Mensch zu Mensch übertragen. Vier Klassen von Plasmodien sind für den Menschen relevant: Plasmodium falciparum, Plasmodium vivax, Plasmodium ovale und Plasmodium malariae. Die schwerwiegendsten Formen von Malaria werden verursacht durch Plasmodium falciparum. Die Zahl der jährlichen Neuerkrankungen wird von der Weltgesundheitsorganisation (World Health Organisation - WHO) auf 300 bis 500 Mio. Fälle geschätzt. Jedes Jahr sterben etwa 1 Mio. Menschen an Malaria.. Im Jahr 2008 haben etwa 243 Millionen Fälle zu nahezu 863.000 Todesfällen geführt.

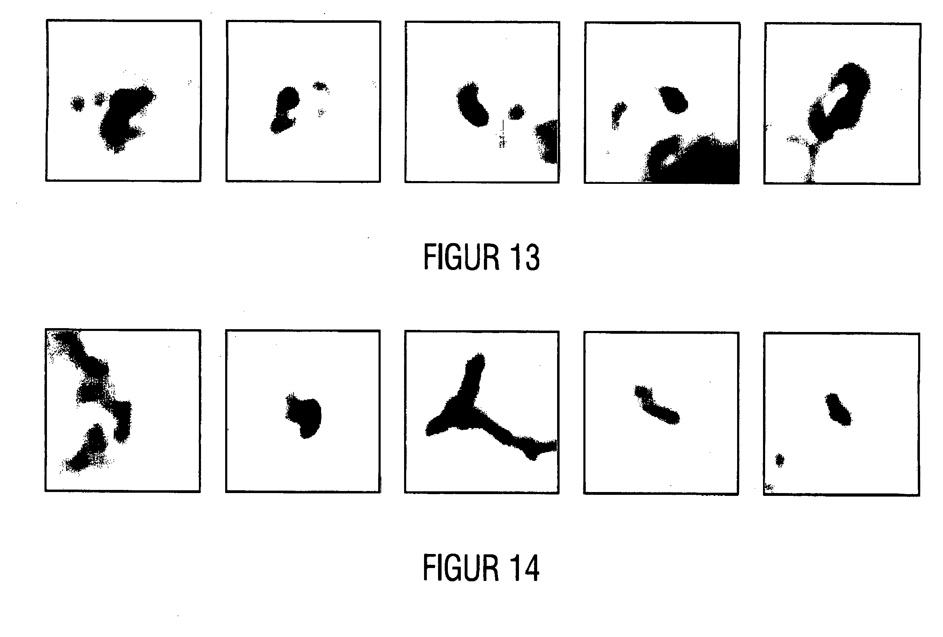

Gemäß der Weltgesundheitsorganisation (WHO) sind mikroskopische Untersuchungen gefärbter Blutausstriche der "Goldstandard" zur Diagnose von Malaria. Zwei Arten von Blutausstrichen werden zur Malariadiagnose verwendet: dünne und dicke. Ein dicker Ausstrich wird zur Suche nach Malariaparasiten eingesetzt, da dieser aus vielen Schichten von Blutzellen besteht und die Untersuchung relativ großer Blutmengen ermöglicht. Oftmals jedoch können die Parasitenarten (z.B. Plasmodium vivax) nicht einzig auf Grundlage eines dicken Ausstrichs bestätigt werden. Deshalb wird für die Charakterisierung der Arten von Parasiten, die in dem dicken Blutausstrich erfasst wurden, üblicherweise ein dünner Ausstrich angefertigt. Nach Angaben der WHO basiert eine routinemäßige Untersuchung von dicken Ausstrichen auf der Untersuchung von zumindest 100 mikroskopischen Sichtfeldern mit starker Vergrößerung (Objektiv x 100, Okular x 10). Dieses Verfahren ist für eine Laborassistentin langwierig und ermüdend und macht eine spezielle Ausbildung und erhebliche Fachkenntnisse erforderlich. Es scheint außerdem fehleranfällig zu sein, da Studien gezeigt haben, dass es in den resultierenden Quantifizierungen einer Parasitendichte starke Variabilitäten innerhalb und unter Beobachtern gibt. Deshalb sind CADe-Systeme (CADe = Computer Aided Detection = computergestützte Erfassung) erforderlich, die den Laborassistenten bei der Erfassung und dem Zählen von Plasmodien in dicken Blutausstrichen helfen. In Fig. 13 sind exemplarische Plasmodien, aus dicken Blutausstrichbildern herausgeschnitten, gezeigt.

Trotz großer Fortschritte im Bereich der Malariadiagnose ist die Lichtmikroskopie nach wie vor die wichtigste Technik für die Diagnose dieser Erkrankung, siehe hierzu auch [Guidelines for the Treatment of Malaria. Second Edition. World Health Organization 2010]. Bei dieser Technik werden mit Hilfe eines Lichtmikroskops auf Basis von dicken und dünnen Blutabstrichen Plasmodien im Blut detektiert und charakterisiert.

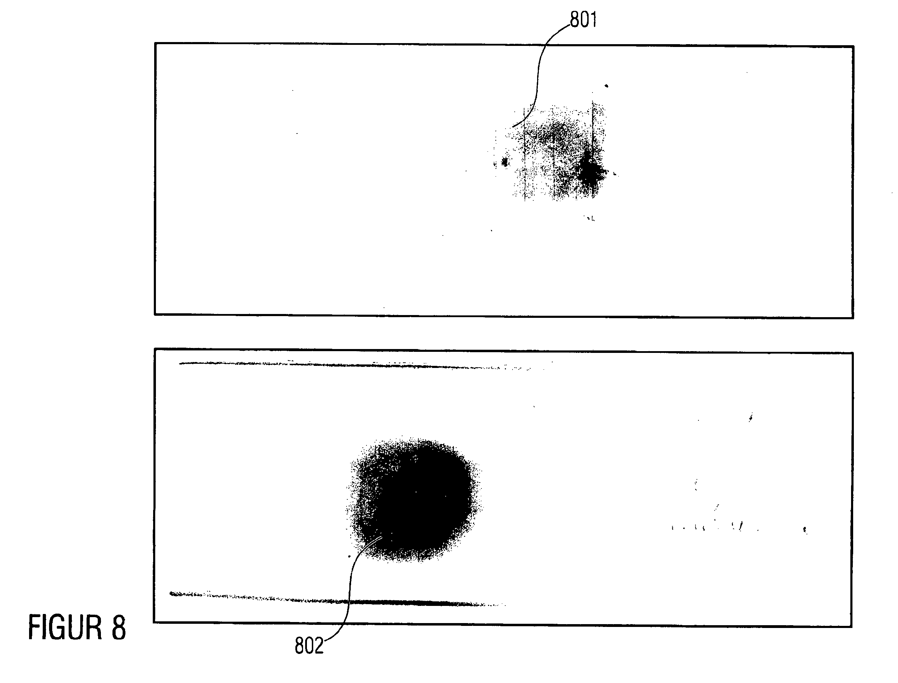

Fig. 8 zeigt dazu eine Aufnahme eines dünnen Blutausstrichs 801 (oben in Fig. 8) und eines dicken Blutausstrichs 802 (unten in Fig. 8). Beim dünnen Ausstrich wird eine kleine Menge Blut großflächig ausgestrichen. Beim dicken Ausstrich wird eine größere Menge .Blut auf einem runden Areal mit einem Durchmesser von etwa 1 cm verteilt. Die Konzentration des Blutes ist beim dicken Ausstrich etwa 20 x höher als beim dünnen Ausstrich, wie in Fig. 8 deutlich an der stärkeren Färbung des dicken Blutausstrichs 802 zu sehen.

In frühen Stadien der Erkrankung mit Malaria können die Plasmodien im Blut in äußerst niedrigen Konzentrationen vorliegen. Daher entspricht die mikroskopische Suche nach Plasmodien in Blutausstrichen oftmals der sprichwörtlichen Suche nach der Nadel im Heuhaufen. Die mikroskopische Diagnose von Malaria ist aus diesem Grund sehr zeitintensiv und verursacht vergleichsweise hohe Kosten. Aufgrund der niedrigen Konzentrationen der Plasmodien im Blut erfolgt die Detektion von Plasmodien nach den Leitlinien der WHO auf Basis eines dicken Blutausstrichs (wie in Fig. 8 beispielhaft als dicker Blutausstrich 802 gezeigt). Beim dicken Blutausstrich werden die Erythrozyten durch Wasser in der Färbelösung hämolysiert (aufgelöst). Durch Anreicherung sind daher pro Sichtfeld etwa 20- bis 40-mal mehr Plasmodien in einem dicken Blutausstrich als in einem dünnen Blutausstrich (wie in Fig. 8 beispielhaft als dünner Blutausstrich 802 gezeigt) vorhanden.

Es existieren Prototypen für computerautomatisierte Mikroskopie-Verfahren/Systeme (computerautomatisierte Mikroskopie-CAM), die die Suche nach Plasmodien auf Basis eines dünnen Blutausstrichs automatisieren. Diese Systeme/Verfahren detektieren und segmentieren zunächst Erythrozyten in digitalen Aufnahmen des dünnen Blutausstrichs und charakterisieren die detektierten Erythrozyten jeweils als "von Plasmodien befallen" oder als "nicht von Plasmodien befallen". Im Folgenden sollen einige Schriften kurz benannt werden, welche sich mit der Detektion von Plasmodien in Blutausstrichen beschäftigen:

Eine grobere Übersicht der derzeit verwendeten Methoden ist in einem Besprechungsartikel von Tek u.a. [siehe auch: F.B. Tek, A.G. Dempster, und I. Kale. Computer vision for microscopy diagnosis of malaria. Malaria Journal, 8(1): 153,2009] zu finden.

Die Erfassung von Plasmodien auf der Grundlage von dicken Ausstrichen ist der empfohlene Standard, der durch die WHO vorgeschlagen wird, und ist in etwa zehn Mal empfindlicher als auf der Grundlage dünner Ausstriche [siehe auch: World Health Organization. World malaria report 2009. WHO Press, 2009].

Dennoch deckt nur ein einziger Artikel, der von Frean [siehe auch: J. Frean. Reliable enumeration of malaria parasites in thick blood films using digital image analysis. Malaria Journal, 8(1): 218, 2009] veröffentlicht wurde, die automatische Erfassung von Plasmodien in dicken Ausstrichen ab. Frean schlägt einen direkten Erfassungsansatz auf der Grundlage einer frei zugänglichen Software vor, die in der Lage ist, mittlere bis große Parasitendichten mit guter Genauigkeit zu schätzen, jedoch für geringere Plasmodien-Dichten (weniger als sechs Parasiten pro Bild) nicht geeignet ist.

Diaz u.a. [siehe auch: G. Diaz, F.A. Gonzalez, und E. Romero. A semi-automatic method for quantification and classification of erythrocytes infected with malaria parasites in microscopic images. J. of Biomedical Informatics, 42(2): 296-307, 2009] schlugen einen Ansatz zur Quantifizierung und Klassifizierung von Erythrozyten, die mit Plasmodium falciparum infiziert sind, vor. Ihr Ansatz besitzt eine Segmentierungs- und eine Klassifizierungsstufe. In der Segmentierungsstufe werden Erythrozyten mittels Luminanzkorrektur, Pixelklassifizierung und einer Inclusion-Tree-Darstellung identifiziert und segmentiert. In der Klassifizierungsstufe werden infizierte Erythrozyten identifiziert und unterschiedliche Infektionsstufen charakterisiert.

Die Schriften WO 03/102210 A2 und US 2004/0241677 A1 beschreiben eine Methode für die automatische Analyse einer biologischen Probe mittels eines Leuchtmikroskops. Als Anwendungsmöglichkeit wird die Suche nach Objekten in Zellen genannt. Als Beispiel wird insbesondere die Suche nach Plasmodien in Erythrozyten genannt. Es handelt sich also um eine Analysetechnik für dünne Blutausstriche, da in dicken Blutausstrichen keine Erythrozyten erhalten bleiben.

Die Schrift WO 2005/121863 A1 beschreibt eine Methode für die automatische Diagnose von Malaria und anderen Infektionskrankheiten (z. B.: Tuberkulose, Chlamydien). Die Schrift beschreibt ein CAM-System dessen Kern Bildanalyseverfahren auf Basis der sogenannten morphologischen Granulometrie darstellen. Die generelle Vorgehensweise zur Detektion von Plasmodien basiert auf der Charakterisierung von Erythrozyten als "von Plasmodien befallen" oder als "nicht von Plasmodien befallen". Es handelt sich also um ein Analyseverfahren für dünne Blutausstriche.

Die Schrift [ROSS, N. E. C. J. PRITCHARD, D. L. RUBIN und A. G. DUSE: Automated image processing method for the diagnosis and classification of malaria on thin blood smears. Medical and Biological Engineering and Computing, 44(5):427-436, 2006] beschreibt das CAM-System, welches in der zuvor genannten Schrift WO 2005/121863 A1 offengelegt wurde.

Der Journalartikel [LE, M.-T., T. R. BRETSCHNEIDER, S. JUSS und P. R. PREISER: A novel semi-automatic imagine processing approach to determine Plasmodium falciparum parasitemia in Giemsa-stained thin blood smears. BMC Cell Biol., 9:15, 2008] beschreibt eine aktuelle Arbeit zur automatischen Detektion von Plasmodien in dünnen Blutausstrichen. Die beschriebenen Verfahren setzen die Abgrenzbarkeit von Erythrozyten voraus und sind unter anderem deshalb nicht auf dicke Blutausstriche übertragbar. Ihr Ansatz basiert auf einer Analyse der gemeinsamen Lokalisation von erfassten Erythrozyten und potenziellen Plasmodien. Obwohl ihre Arbeit auf dünnen Ausstrichen basiert, was insbesondere zur Unterscheidung von Arten geeignet ist, deckt ihre Arbeit diesen Aspekt nicht ab.

In dem Journalartikel [EDEN, M., J. E. GREEN und A. SUN: Feasibility of computer screening of blood films for the detection of malaria parasites. Bull World Health Organ, 48(2):211-218, 1973] wird ein einfacheres Verfahren für die Charakterisierung von Erythrozyten mit dem Ziel der Detektion von Plasmodien beschrieben. Auch dieses Verfahren ist nicht auf dicke Blutausstriche übertragbar.

In den Arbeiten [DEMPASTER, A. G: und C. DI RUBERTO: Using granulometries in processing images of malarial blood. In: Proc. IEEE International Symposium on Circuits and Systems ISCAS 2001, Bd. 5, S. 291-294, 6-9 May 2001]; [DI RUBERTO, C., A. DEMPSTER, S. KHAN und B. JARRA: Automatic thresholding of infected blood images using granulometry and regional extrema. In: Proc. 15th International Conference on Pattern Recognition, Bd. 3, S. 441 - 444, 3 - 7 Sept. 2000]; [DI RUBERTO, C., A. DEMPSTER, S. KHAN und B. JARRA: Segmentation of blood images using morphological operators. In: Proc. 15th International Conference on Pattern Recognition, Bd. 3, S. 397 - 400, 3 - 7 Sept. 2000]; [DI RUBERTO, C., A. DEMPSTER, S. KHAN und B. JARRA: Morphological Image Processing for Evaluating Malaria Disease. In: IWVF-4: Proceedings of the 4 th International Workshop on Visual Form, S. 739 - 748, London. UK, 2001. Springer Verlag]; und [DI RUBERTO, C., A. DEMPSTER, S. KHAN und B. JARRA: Analysis of infected blood cell images using morphological operators. Image and Vision Computing, 20(2):133-146, February 2002] wird ein CAM-Verfahren für die Analyse von dünnen Blutausstrichen und für die Detektion von Plasmodien beschrieben. Auch dieses System bzw. Verfahren basiert auf der Analyse von Erythrozyten und damit auf dünnen Blutausstrichen.

Die Schrift [HALIM, S., T. R. BRETSCHNEIDER, Y. LI, P. R. PREISER und C. KUSS: Estimating Malaria Parasitaemia from Blood Smear Images. IN: Proc. 9 th International Conference on Control, Automation, Robotics and Vision ICARCV ,06, S. 1-6, 5 - 8 Dec. 2006] beschreibt ein Verfahren zur Analyse von Erythrozyten mit dem Ziel der Plasmodien-Detektion.

Die Schrift [TEK, F. B., A. G. DEMPSTER und I. KALE: Malaria parasite detection in peripheral blood images. In British Machine Vision Conference 2006 (BMVC2006), S. 347-356, 2006] beschreibt ein Verfahren zur Analyse von dünnen Blutausstrichen mit dem Ziel der Plasmodien-Detektion. Im Unterschied zu den oben genannten Verfahren kommt hier eine pixelweise Klassifikation zur direkten Detektion von Plasmodien zum Einsatz. Eine Bayessche Pixelklassifizierung wird eingesetzt, um in der ersten Stufe Plasmodien-Kandidaten zu finden. Ein kNN-Klassifizierer, der auf Form-, Histogramm- und statistischen Momentmerkmalen basiert, wird in einer zweiten Stufe eingesetzt, um die Anzahl von falsch-positiven Erfassungen zu reduzieren.

Die im Obigen genannten Verfahren haben gemein, dass sie keine zuverlässige Detektion von Plasmodien, auch in frühen Stadien der genannten Malariaerkrankung ermöglichen.

Zusammenfassung der Erfindung

Es ist eine Aufgabe der vorliegenden Erfindung ein Konzept zu schaffen, welches eine verbesserte Detektion von Zellen in einer Aufnahme, beispielsweise von Plasmodien in einer Aufnahme eines dicken Blutausstrichs, ermöglicht.

Diese Aufgabe wird durch den Gegenstand der beigefügten unabhängigen Patentansprüche gelöst.

Ausführungsbeispiele der vorliegenden Erfindung schaffen eine Vorrichtung zur Bestimmung von Objekten in einer Farbaufnahme. Die Vorrichtung umfasst einen Identifizierer, einen Merkmalsextrahierer und einen Klassifizierer. Der Identifizierer ist ausgebildet, um aus einer Mehrzahl von, in einem von der Farbaufnahme abgeleiteten Binärbild vorliegenden, zusammenhängenden Regionen, basierend auf einer Größe und/oder einer Form der zusammenhängenden Regionen, diejenigen zusammenhängenden Regionen zu identifizieren, deren Größe und/oder Form einer vorbestimmten Bedingung entspricht. Der Merkmalsextrahierer ist ausgebildet, um einen Merkmalssatz für jede der identifizierten zusammenhängenden Regionen aus der Farbaufnahme zu extrahieren. Der Klassifizierer ist ausgebildet, um die identifizierten zusammenhängenden Regionen in zumindest zwei disjunkte Gruppen basierend auf den extrahierten Merkmalssätzen für die identifizierten zusammenhängenden Regionen zu klassifizieren.

Es ist eine Idee der vorliegenden Erfindung, dass eine verbesserte Bestimmung von Objekten in einer Aufnahme erreicht werden kann, wenn zusammenhängende Regionen, welche Teile der zu bestimmenden Objekte sind, basierend auf ihrer Größe und/oder Form in einem Binärbild identifiziert werden und wenn für eine anschließende Klassifikation dieser identifizierten zusammenhängenden Regionen Merkmalssätze dieser identifizierten zusammenhängenden Regionen aus der Farbaufnahme, in welcher die zu bestimmenden Objekte vorliegen extrahiert werden. Mit anderen Worten es ist eine Idee von Ausführungsbeispielen der vorliegenden Erfindung die zu bestimmenden Objekte direkt zu detektieren und zu klassifizieren. Beispielsweise bei der Anwendung der Vorrichtung zur Bestimmung von Plasmodien in einer Farbaufnahme eines dicken Blutausstrichs können daher die identifizierten zusammenhängenden Regionen Teile von Plasmodien bilden.

Ausführungsbeispiele der vorliegenden Erfindung ermöglichen damit im Gegensatz zu denen im vorherigen genannten Verfahren zur Detektion von Plasmodien in dünnen Blutausstrichen, eine direkte Detektion der Plasmodien und eine direkte Klassifizierung der Plasmodien ohne eine Detektion der Erythrozyten.

Die Vorrichtung kann beispielsweise ein CAM-System sein, welches beispielsweise ein automatisiertes Mikroskop, eine automatisierte XY-Bühne, eine digitale Kamera, ein Beleuchtungssystem, einen Rechner und einen Monitor aufweisen kann.

Weitere Ausführungsbeispiele der vorliegenden Erfindung schaffen ein Verfahren zur Bestimmung von Objekten in einer Farbaufnahme. Das Verfahren weist einen Schritt des Identifizierens aus einer Mehrzahl von, in einem von der Farbaufnahme abgeleiteten Binärbild vorliegenden, zusammenhängenden Regionen, basierend auf einer Größe und/oder Form der zusammenhängenden Region, derjenigen zusammenhängenden Regionen, deren Größe und/oder Form einer vorbestimmten Bedingung entspricht. Weiterhin weist das Verfahren einen Schritt des Extrahierens eines Merkmalssatzes für jede der identifizierten zusammenhängenden Regionen aus der Farbaufnahme auf. Weiterhin weist das Verfahren einen Schritt des Klassifizierens der identifizierten zusammenhängenden Regionen in zumindest zwei disjunkte Gruppen, basierend auf den extrahierten Merkmalssätzen für die identifizierten zusamnienhängenden Regionen, auf.

Auch das Verfahren kann, wie auch die bereits im Vorherigen erwähnte Vorrichtung zur Bestimmung von Plasmodien in einer Farbaufnahme eines dicken Blutausstrichs verwendet werden.

Mit anderen Worten schaffen Ausführungsbeispiele der vorliegenden Erfindung ein CAM-System (oder eine CAM-Vorrichtung) und ein CAM-Verfahren für die automatische Detektion von Plasmodien, beispielsweise auf Basis eines vollautomatisierten Mikroskops. Die im Vorherigen genannten Schriften beschreiben nahezu ausschließlich Systeme und Verfahren für die Detektion von Plasmodien in dünnen Blutausstrichen. Da die Konzentration von Plasmodien im Frühstadium einer Malariaerkrankung sehr gering ist, ist die Detektion von Plasmodien in diesem Fall im dünnen Blutausstrich nicht praktikabel. Ausführungsbeispiele der vorliegenden Erfindung ermöglichen eine Detektion von Plasmodien in dicken Blutausstrichen. Mit anderen Worten kann bei Ausführungsbeispielen der vorliegenden Erfindung eine direkte Detektion von Plasmodien in dicken Blutausstrichen erfolgen. Dieser Unterschied zu den im Vorherigen genannten Schriften erlaubt nicht nur die Diagnose der Erkrankung im Frühstadium, sondern kann gänzlich von den bekannten Lösungsansätzen abweichende Lösungsansätze für die Plasmodien-Detektion erfordern. Verfahren, wie sie im einleitenden Teil dieser Anmeldung beschrieben wurden, detektieren und segmentieren zunächst die roten Blutzellen (die Erythrozyten) um diese anschließend als von Plasmodien befallen und als nicht von Plasmodien befallen zu charakterisieren. Es wurde herausgefunden, dass diese Vorgehensweise bei dicken Blutausstrichen nicht möglich ist, da durch die spezielle Färbe- und Präparationstechnik für dicke Blutausstriche, die Zellmembranen der roten Blutkörperchen aufgelöst werden und die Zellen dadurch nicht mehr voneinander und vom Hintergrund abgrenzbar sind. Die im einleitenden Teil dieser Anmeldung genannten Verfahren zur Detektion von Plasmodien im dünnen Blutausstrich sind daher nicht für dicke Blutausstriche anwendbar und können daher auch nicht zur zuverlässigen Detektion von Malaria im Frühstadium dienen. Es wurde weiterhin herausgefunden, dass eine Detektion von Plasmodien in dicken Blutausstrichen erfolgen kann, wenn diese unabhängig von ihrer Lage in den Erythrozyten direkt detektiert und charakterisiert werden können. Aus diesem Grund können bei CAM-Systemen und CAM-Verfahren gemäß Ausführungsbeispielen der vorliegenden Erfindung Plasmodien direkt detektiert und charakterisiert werden. Ausführungsbeispiele der vorliegenden Erfindung stellen damit einen Lösungsansatz für das Problem der automatisierten Diagnose von Malaria auf Basis dicker Blutausstriche und konkreter für die automatische Detektion von Plasmodien in dicken Blutausstrichen dar. Ausführungsbeispiele der vorliegenden Erfindung ermöglichen damit, im Gegensatz zu den im einleitenden Teil dieser Anmeldung erwähnten Verfahren, eine computerassistierte Diagnose von Malaria bereits in frühen Stadien.

Ausgewählte Ausführungsbeispiele schaffen einen neuartigen Ansatz für die automatische Erfassung von Malariaparasiten in dicken Blutausstrichen. Ausgewählte Ausführungsbeispiele konzentrieren sich auf die Erfassung von Plasmodium falciparum-Parasiten, da diese Art für etwa 80% aller Malariafälle und für etwa 90% aller Todesfälle durch Malaria verantwortlich ist. Drei Wachstumsstufen von Plasmodien sind in peripherem Blut zu finden: Trophozoiten, Schizonten und Gametozyten. Infektionen mit Plasmodium falciparum sind jedoch speziell, da Schizonten üblicherweise nicht und Gametozyten nur selten in peripherem Blut zu sehen sind. Deshalb konzentrieren sich ausgewählte Ausführungsbeispiele hauptsächlich auf die Erfassung von Trophozoiten. Der vorliegende Ansatz geht das Problem einer genauen Erfassung unabhängig von einer Plasmodiendichte an.

Figurenkurzbeschreibung

Ausführungsbeispiele der vorliegenden Erfindung werden im Folgenden detailliert anhand der beiliegenden Figuren beschrieben. Es zeigen:

Fig. 1a        ein Blockdiagramm einer Vorrichtung gemäß einem Ausführungsbeispiel der vorliegenden Erfindung;

Fig. 1b        ein Blockdiagramm einer Vorrichtung gemäß einem weiteren Ausführungbeispiel der vorliegenden Erfindung;

Fig. 2        ein Flussdiagramm eines Verfahrens gemäß einem Ausführungsbeispiel der vorliegenden Erfindung;

Fig. 3        ein Bild einer Vorrichtung gemäß einem weiteren Ausführungsbeispiel der vorliegenden Erfindung;

Fig. 4        ein Flussdiagramm eines Verfahrens gemäß einem weiteren Ausführungsbeispiel der vorliegenden Erfindung am Beispiel der Detektion von Plasmodien;

Fig. 5a        ein Bild eines vergrößerten Teilbereichs eines dicken Blutausstrichs;

Fig. 5b        ein Bild eines vergrößerten Teilbereichs eines dünnen Blutausstrichs als Vergleichsbeispiel zu Fig. 5a;

Fig. 6a bis Fig. 6f        Zwischenbilder, wie sie bei der Durchführung des Verfahrens gemäß Fig. 4 entstehen können;

Fig. 7a bis 7e        Bilder von Ausschnitten, welche in dem Verfahren gemäß Fig. 4 vor dem Schritt der Reduktion von falsch-positiv detektierten Plasmodien vorliegen können;

Fig. 8          ein Vergleichsbild zwischen einem dicken Blutausstrich und einem dünnen Blutausstrich.

Fig. 9          eine Darstellung eines nicht-flachen Strukturierungselements, das ein Paraboloid darstellt;

Fig. 10         ein Ausschnitt einer Farbaufnahme mit 2 Plasmodien;

Fig. 11         ein Ausschnitt eines aus der in Fig. 10 gezeigten Farbaufnahme gewonnen Grauwertbildes;

Fig. 12.        der in Fig. 11 gezeigte Ausschnitt nach der Anwendung des "black-top-hat" operators

Fig. 13         ROIs von richtig positiv erfassten Plasmodien;

Fig. 14         ROIs von falsch positiv erfassten Plasmodien; und

Fig. 15         eine Diagramm zur Darstellung der mittleren Anzahl falsch-positiver Erfassungen pro Bild (FPB) in Abhängigkeit einer Echt-Positiv-Rate (EPR) bei einem Ausführtuigsbeispiel.

Detaillierte Beschreibung von Ausführungsbeispielen

Bevor im Folgenden Ausführungsbeispiele der vorliegenden Erfindung anhand der beiliegenden Figuren detailliert beschrieben werden, wird darauf hingewiesen, dass gleiche Elemente und/oder Elemente gleicher Funktion mit denselben Bezugszeichen versehen sind und dass auf eine wiederholte Beschreibung dieser Elemente verzichtet wird. Beschreibungen von Elementen mit gleichen Bezugszeichen sind daher untereinander austauschbar.

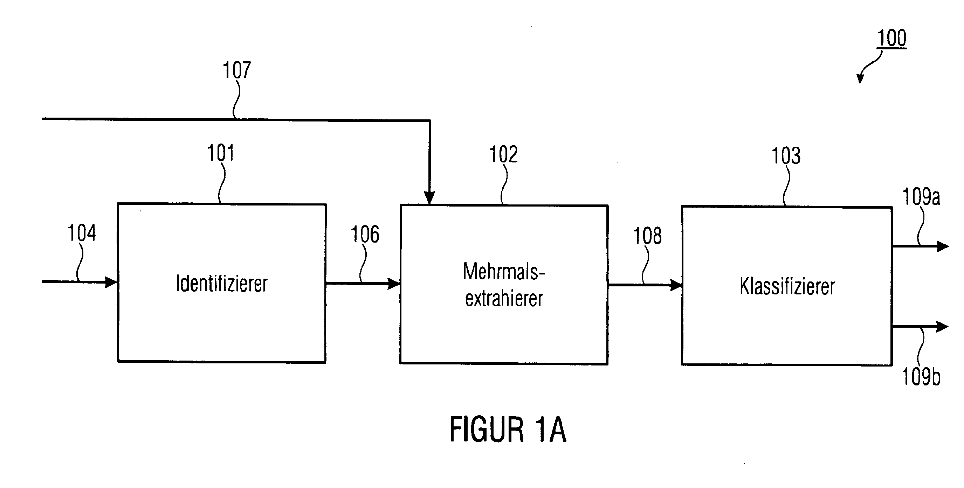

Fig. 1a zeigt ein Blockdiagramm einer Vorrichtung 100 zur Bestimmung von Objekten in einer Farbaufnahme 107. Die Vorrichtung 100 weist einen Identifizierer 101, einen Merkmalsextrahierer 102 und einen Klassifizierer 103 auf. Der Identifizierer 101 ist ausgebildet, um aus einer Mehrzahl von zusammenhängenden Regionen (auch bezeichnet als Regionen von Interesse, "Regions of interest" - ROIs), basierend auf einer Größe und/oder Form der zusammenhängenden Regionen, die zusammenhängenden Regionen zu identifizieren, deren Größe und/oder Form einer vorbestimmten Bedingung entspricht. Die zusammenhängenden Regionen liegen dabei in einem Binärbild 104 vor. Das Binärbild 104 weist eine Mehrzahl von Bildpunkten auf, wobei jeder Bildpunkt entweder den Binärwert logisch "1" oder logisch "0" hat. Eine zusammenhängende Region kann beispielsweise eine Mehrzahl von Bildpunkten des gleichen Binärwerts aufweisen, welche direkt miteinander oder über Bildpunkte desselben Binärwerts miteinander verbunden sind. Das Binärbild 104 kann beispielsweise eine Mehrzahl von zusammenhängenden Regionen mit demselben Binärwert aufweisen, beispielsweise in Form von Inseln des Binärbilds 104. Diese Inseln des Binärbilds 104 können beispielsweise einen Vordergrund des Binärbilds 104 bilden. Weiterhin kann das Binärbild 104 eine zusammenhängende Region eines, zu dem Binärwert der Inseln, komplementären Binärwerts aufweisen, welche einen Hintergrund der Aufnahme bildet und die einzelnen Inseln umschließt. Im Folgenden wird angenommen, dass die zusammenhängenden Regionen, welche den Vordergrund bilden den Binärwert logisch "1" haben. Die vorbestimmte Bedingung kann beispielsweise eine maximale Größe und/oder eine bestimmte Form dieser Inseln vorgeben, sodass nur Inseln identifiziert werden, deren Größe oder Form der vorbestimmten Bedingung entspricht. Eine Ausgabe des Identifizierers 101 kann ein reduziertes Binärbild 106 sein, welches die identifizierten zusammenhängenden Regionen enthält und bei dem die nichtidentifizierten zusammenhängenden Regionen aus dem Binärbild 104 von dem Identifizierer 101 herausgefiltert wurden. Es ist auch möglich, dass keine der in dem Binärbild 104 vorliegenden zusammenhängenden Regionen der vorbestimmten Bedingung entspricht, sodass das reduzierte Binärbild 106 keine identifizierten zusammenhängenden Regionen enthält. In dem Fall kann das reduzierte Binärbild 106 beispielsweise nur aus Hintergrund, also beispielsweise einer zusammenhängenden Region mit dem logischen Binärwert "0" bestehen.

Der Merkmalsextrahierer 102 ist ausgebildet, um für jede der identifizierten zusammenhängenden Regionen einen Merkmalssatz aus der Farbaufnahme 107 zu extrahieren. Die Farbaufnahme 107 kann dazu dem Merkmalsextrahierer 102 zur Verfügung gestellt werden. Die identifizierten zusammenhängenden Regionen können beispielsweise in dem von dem Identifizierer 101 bereitgestellten reduzierten Binärbild 106 vorliegen.

Gemäß einigen Ausführungsbeispielen kann ein Merkmalssatz einer identifizierten zusammenhängenden Region beispielsweise Informationen über deren Momentmerkmale, Formmerkmale, Texturmerkmale und/oder Farbmerkmale enthalten. Der Merkmalsextrahierer 102 kann beispielsweise die Merkmalssätze der identifizierten zusammenhängenden Regionen aus Ausschnitten der Farbaufnahme 107, welche die jeweiligen identifizierten zusammenhängenden Regionen umgeben bzw. in welchen die identifizierten zusammenhängenden Regionen liegen, extrahieren. Gemäß einigen Ausführungsbeispielen kann der Merkmalsraum beispielweise 174 Dimensionen besitzen, was eine Auswahl eines Merkmalsteilsatzes erforderlich machen kann, um den Fluch der Dimensionalität ("the curse of dimensionality") zu vermeiden. Ferner sind alle Merkmale genormt, so dass sie einen Mittelwert von 0 und eine Standardabweichung

6

von 1 besitzen.

Ein optimaler Merkmalsteilsatz, welcher von dem Merkmalsextrahierer 102 aus den identifizierten zusammenhängenden Regionen extrahiert wird kann in einem zweistufigen Trainingsverfahren ausgewählt werden. Dazu können mit Hilfe eines Merkmalsselektierers in einem ersten Schritt die 174 Merkmale basierend auf einem Trainingsdatensatz bewertet werden und die 60 besten Merkmalen ausgewählt werden. Aus diesen 60 Merkmalen kann in einem zweiten Schritt mittels eines genetischen Algorithmus ein kleiner Teil von Merkmalen ausgewählt werden, welcher von dem Merkmalsextrahierer 102 aus den identifizierten zusammenhängenden Regionen als Merkmalsteilsatz extrahiert wird. Mit anderen Worten ist der Merkmalsselektierer ausgebildet, um den Merkmalssatz auf einen Merkmalsteilsatz zu reduzieren, welcher die Merkmale aus dem gesamten Merkmalsraum beschreibt, die von dem Merkmalsextrahierer 102 aus den zusammenhängenden identifizierten Regionen extrahiert werden. Der Merkmalsextrahierer 102, kann also, bevor dieser zur Extraktion der Merkmalssätze aus den identifizierten zusammenhängen Regionen der Farbaufnahme 107 verwendet wird, so eingestellt werden, dass er nur eine bestimmte Teilmenge der möglichen Merkmale (den Merkmalsteilsatz) aus den identifizierten zusammenhängen Regionen extrahiert.

Da das Binärbild 104 und damit auch das reduzierte Binärbild 106 auf der Farbaufnahme 107 basieren können Positionen der identifizierten zusammenhängenden Regionen in dem reduzierten Binärbild 106 identisch der Positionen dieser identifizierten zusammenhängenden Regionen in der Farbaufnahme 107 sein. Der Merkmalsextrahierer 102 kann daher beispielsweise die zusammenhängenden identifizierten Regionen als Zentren für die jeweiligen Ausschnitte, aus denen der Merkmalsextrahierer 102 die Merkmalssätze extrahieren kann, wählen. Mit anderen Worten können Ausschnitte jeweils auf die zusammenhängende Region, die in ihnen liegt, zentriert sein. Dazu kann der Merkmalsextrahierer 102 beispielsweise Schwerpunkte für die identifizierten zusammenhängenden Regionen in dem reduzierten Binärbild 106 bestimmen und diese Schwerpunkte als Schwerpunkte für die jeweiligen Ausschnitte wählen, in denen die identifizierten zusammenhängenden Regionen liegen.

Die Größe der Ausschnitte kann der Merkmalsextrahierer 102 beispielsweise unabhängig von einer Form oder Größe der zu dem Ausschnitt gehörigen identifizierten zusammenhängenden Regionen wählen, jedoch mindestens so groß, dass der Ausschnitt die zugehörige identifizierte zusammenhängende Region vollständig erfasst. Weiterhin kann eine Größe und/oder Form der Ausschnitte bei allen Ausschnitten dieselbe sein. So kann die Größe und/oder Form dieser Ausschnitte beispielsweise abhängig von einer maximalen Größe und/oder Form der zu bestimmenden Objekte gewählt werden. Beispielsweise kann eine Größe der Ausschnitte so gewählt werden, dass diese ein größtmögliches zu bestimmendes Objekt noch erfassen können. Typischerweise ist im Vorhinein bereits klar, von was für einem Typ die zu bestimmenden (also die gesuchten) Objekte sind. Diese verschieden Typen (wie beispielsweise Thrombozyten, Leukozyten, Plasmodien etc.) von Objekten kommen in der Natur typischerweise mit unterschiedlichen maximal möglichen Größen vor. Die Größe der Ausschnitte kann daher abhängig von dem Typ der zu bestimmenden Objekte gewählt werden, so dass ein größtmögliches Objekt dieses Typs noch vollständig in den Ausschnitt, in dem das größtmögliche Objekt liegt, passt. Beispielsweise kann die Fläche der Ausschnitte so gewählt werden, dass sie mindestens einer größtmöglichen Fläche der zu bestimmenden Objekte entspricht, wobei die größtmögliche Fläche der zu bestimmenden Objekte durch die vorbestimmte Bedingung bestimmt ist.

Weiterhin können die Ausschnitte beispielsweise eine quadratische, runde, ovale oder andere beliebige Form aufweisen. Gemäß einem Ausführungsbeispiel kann eine Form der Ausschnitte beispielsweise quadratisch sein, beispielsweise 80 x 80 Bildpunkte.

Eine Ausgabe des Merkmalsextrahierer 102 ist ein Satz 108 von Merkmalssätzen für die identifizierten zusammenhängenden Regionen. Wie oben beschrieben, können gemäß weiteren Ausführungsbeispielen diese Merkmalssätze nur der die in der Trainingsphase des Merkmalsextrahierers 102 reduzierten Merkmale aufweisen.

Der Klassifizierer 103 ist ausgebildet, um die identifizierten zusammenhängenden Regionen in zumindest 2 disjunkte Gruppen basierend auf den extrahierten Merkmalssätzen für die identifizierten zusammenhängenden Regionen zu klassifizieren. Der Klassifizierer 103 kann beispielsweise die identifizierten zusammenhängenden Regionen in eine erste Gruppe 109a und eine zweite Gruppe 109b klassifizieren. Die erste Gruppe 109a kann dabei beispielsweise richtig-positiv identifizierte zusammenhängende Regionen aufweisen. Die zweite Gruppe 109b kann dabei falsch-positiv identifizierte zusammenhängende Regionen aufweisen. Richtig-positiv identifizierte zusammenhängende Regionen sind dabei die identifizierten zusammenhängenden Regionen, welche basierend auf ihren Merkmalssätzen als die zu bestimmenden Objekte in der Farbaufnahme 107 identifiziert wurden. Falsch-positiv identifizierte zusammenhängende Regionen, welche der zweiten Gruppe 109b zugeordnet werden sind dabei identifizierte zusammenhängende Regionen, welche zwar auf Grund ihrer Größe und/oder Form von dem Identifizierer 101 im Binärbild 104 identifiziert wurden, aber auf Grund ihrer Merkmalssätze von dem Klassifizierer 103 nicht als zu bestimmende Objekte klassifiziert wurden.

Mit anderen Worten liegen die zu bestimmenden Objekte in der ersten Gruppe 109a als die richtig-positiv identifizierten zusammenhängenden Regionen vor. Die in der zweiten Gruppe 109b vorliegenden identifizierten zusammenhängenden Regionen entsprechen zwar auf Grund ihrer Größer und/oder Form im Binärbild 104 der vorbestimmten Bedingung für die zu bestimmenden Objekte, kommen aber auf Grund ihrer Merkmalssätze, welche aus der Farbaufnahme 107 extrahiert wurden, nicht als zu bestimmende Objekte in Frage.

Zusätzlich zu der Reduktion des Merkmalsatzes für den Merkmalsextrahierer 102 kann in dem Trainingsverfahren auch der Klassifizierer 103, bevor dieser zur Klassifikation der identifizierten zusammenhängenden Regionen der Farbaufnahme 107 verwendet wird, basierend auf dem Trainingsdatensatz und dem reduzierten Merkmalsteilsatz (einmalig) trainiert werden, um ein optimiertes Klassifizierungsergebnis bei der Klassifikation der identifizierten zusammenhängenden Regionen der Farbaufnahme 107 zu erreichen. Der Klassifizier kann dann die Klassifikation der identifizierten zusammenhängenden Regionen der Farbaufnahme 107 basierend nur auf denen im Trainingsverfahren reduzierten Merkmalen vornehmen. Gemäß weiteren Ausführungsbeispielen kann (beispielsweise bei einem kleinen Merkmalsraum) auch der oben beschriebene Schritt der Merkmalsselektion weggelassen werden, so dass der Klassifizierer 103 basierend auf dem gesamten Merkmalsraum trainiert wird und die Klassifikation der identifizierten zusammenhängenden Regionen der Farbaufnahme 107 basierend auf dem gesamten Merkmalsraum erfolgt. Der Schritt der Merkmalsselektion ist daher ein nicht immer notwendiger Schritt. Ab einer bestimmten Dimensionalität (beispielsweise bei der oben beschrieben Größe des Merkmalsraums mit 174 Merkmalen) ist er jedoch vorteilhaft um zum Einen die Anzahl der zu extrahierenden Merkmale zu reduzieren (Beschleunigung des gesamten Detektionsverfahrens) und zum Anderen den Fluch der Dimensionalität zu vermeiden.

Eine Ausgabe der Vorrichtung 100 kann damit die erste Gruppe 109a mit den richtig-positiv identifizierten zusammenhängenden Regionen sein. Eine richtig-positiv identifizierte zusammenhängende Region bildet damit jeweils ein zu bestimmendes Objekt in der Farbaufnahme 107 oder ist zumindest Teil eines zu bestimmenden Objekts in der Farbaufnahme 107.

Die Ausgabe der Vorrichtung 100 und damit die bestimmten Objekte können beispielsweise einem Anwender dargestellt werden, sodass dieser noch eine manuelle Überprüfung der bestimmten Objekte durchführen kann. Weiterhin kann als eine zweite Ausgabe der Vorrichtung 100 auch die zweite Gruppe 109b der falsch-positiv identifizierten zusammenhängenden Regionen angezeigt werden, beispielsweise um noch eine größere Sicherheit bei der Bestimmung der Objekte zu erreichen, falls eine der identifizierten zusammenhängenden Regionen fälschlicherweise als falsch-positiv klassifiziert wurde.

Gemäß einigen Ausführungsbeispielen kann der Klassifizierer 103 die extrahierten Merkmalssätze für die identifizierten zusammenhängenden Regionen mit (von in einer Trainingsphase erhaltenen) Referenzmerkmalssätzen vergleichen, um als ein Resultat des Vergleichs jede identifizierte zusammenhängende Region zu genau einer der disjunkten Gruppen 109a , 109b zuzuordnen. Die Referenzmerkmalssätze können beispielsweise im Vorhinein per Hand dem Klassifizierer 103 antrainiert werden, beispielsweise auf Basis einer Datenbank von bereits im Vorhinein (manuell) bestimmten Objekten. Gemäß weiteren Ausführungsbeispielen können auch die in der ersten Gruppe 109a als richtig-positiv identifizierte zusammenhängende Regionen vorliegenden Objekte in die Datenbank aufgenommen werden, um so die Referenzmerkmalssätze zu vergrößern.

Wie bereits erwähnt, kann der Merkmalsextrahierer 102 so ausgebildet sein, dass die extrahierten Merkmalssätze mindestens Formmerkmale, Texturmerkmale und/oder Farbmerkmale für die zugehörigen identifizierten zusammenhängenden Regionen aufweisen. Der Klassifizierer 103 kann daher ausgebildet sein, um die identifizierten zusammenhängenden Regionen in die disjunkten Gruppen 109a, 109b basierend auf mindestens einem dieser, in den Merkmalssätzen enthaltenen Merkmalen zu klassifizieren.

Das Binärbild 104 bildet zusammen mit der Farbaufnahme 107 eine Eingabe für die Vorrichtung 100.

Gemäß einigen Ausführungsbeispielen kann die Farbaufnahme 107 beispielsweise eine Aufnahme eines Teilbereichs eines dicken Blutausstrichs sein. Die zu bestimmenden Objekte können beispielsweise, die im Vorherigen erwähnten, Plasmodien in dem dicken Blutausstrich sein. Nach den Richtlinien der Weltgesundheitsorganisation sollen für eine zuverlässige Detektion von Plasmodien in einem dicken Blutausstrich mindestens 100 Sichtfelder des dicken Blutausstrichs erstellt werden, und in diesen die vorliegenden Plasmodien detektiert werden. Die Farbaufnahme 107 kann dabei beispielsweise eines dieser Sichtfelder darstellen. Mit anderen Worten kann die Vorrichtung 100 für jedes dieser Sichtfelder die in dem Sichtfeld des dicken Blutausstrichs vorliegenden Plasmodien bestimmen. Die in diesem Sichtfeld vorliegenden Plasmodien werden als die richtig-positiv identifizierten zusammenhängenden Regionen in der ersten Gruppe 109a der Vorrichtung 100 ausgegeben.

Das Binärbild 104 kann bereits von einer externen Vorrichtung aus der Farbaufnahme 107 abgeleitet worden sein und der Vorrichtung 100 zur Verfügung gestellt worden sein, jedoch kann gemäß weiteren Ausführungsbeispielen auch eine zusätzliche Einrichtung der Vorrichtung 100 aus der Farbaufnahme 107 das Binärbild 104 ableiten. Weiterhin kann auch die Farbaufnahme 107 der Vorrichtung 100 zur Verfügung gestellt werden, beispielsweise in einem digitalisierten Format. Weiterhin kann aber auch die Farbaufnahme 107 von einer weiteren Einrichtung der Vorrichtung 100 aufgenommen werden.

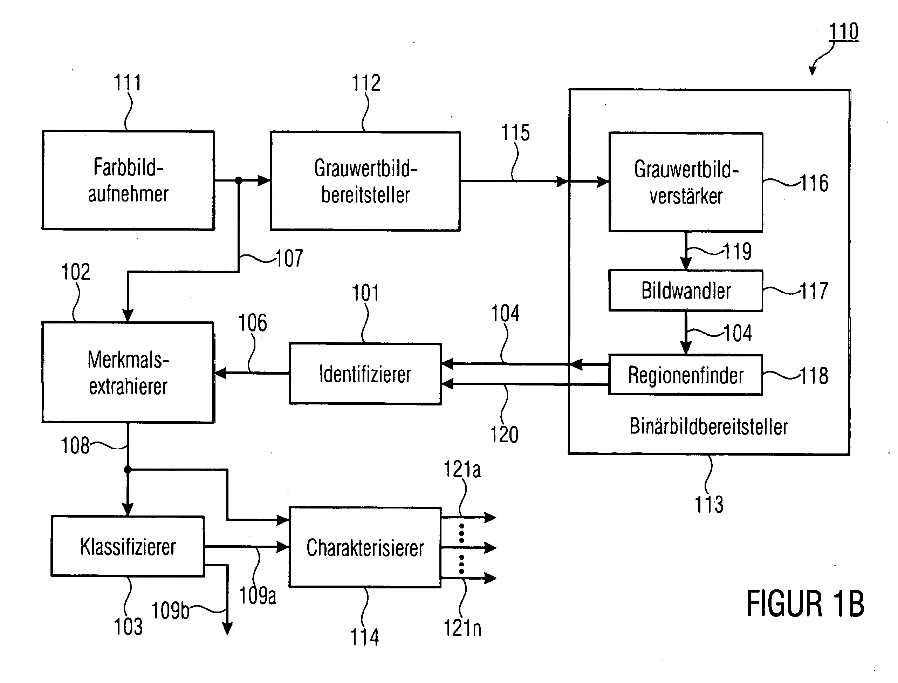

Fig. 1b zeigt eine Vorrichtung 110 zur Bestimmung von Objekten in einer Farbaufnahme. Die Vorrichtung 110 kann in ihrer grundsätzlichen Funktion hier beispielsweise der in Fig. 1a gezeigten Vorrichtung 100 entsprechen, wobei in Fig. 1b weitere optionale Details gezeigt sind. Die Vorrichtung 110 weist einen Farbbildaufnehmer 111, einen Grauwertbildbereitsteller 112, einen Binärbildbereitsteller 113, einen Identifizierer 101, einen Merkmalsextrahierer 102, einen Klassifizierer 103 und einen Charakterisierer 114 auf. Der Identifizierer 101, der Merkmalsextrahierer 102 und der Klassifizierer 103 können von ihrer Funktion her im Wesentlichen dem Identifizierer 101, dem Merkmalsextrahierer 102 und dem Klassifizierer 103 der Vorrichtung 100 entsprechen.

Daher sollen hier die Funktionen dieser drei Einrichtungen nicht nochmals detailliert erläutert werden, sondern es sollen nur die Funktionen der zusätzlichen optionalen Einrichtungen, also des Farbbildaufnehmers 111, des Grauwertbildbereitstellers 112, des Binärbildbereitstellers 113 und des Charakterisierers 114 detailliert erläutert werden.

Der Farbbildaufnehmer 111 dient dazu die Farbaufnahme 107 aufzunehmen, um diese dem Grauwertbildbereitsteller 112 bereitzustellen. Der Farbbildaufnehmer 111 kann beispielsweise ein Scanner sein, welcher ein analoges Bild digitalisiert um dieses als Farbaufnahme 107 bereitzustellen. Weiterhin kann der Farbbildaufnehmer 111 aber auch eine Kamera aufweisen, welche ein Foto einer Probe macht, in welcher die zu bestimmenden Objekte vorliegen und dieses als die Farbaufnahme 107 bereitstellt. In einem Ausführungsbeispiel kann die Probe auf einem Träger vorliegen, und der Farbbildaufnehmer 111 kann ausgebildet sein, um die Lage der Probe auf dem Träger zu lokalisieren. Dies kann beispielsweise durch Aufnahme eines Fotos der Probe in niedriger Vergrößerung und Anwendung eines einfachen Schwellwertverfahrens erfolgen. Nach der Lokalisation der Probe kann der Farbbildaufnehmer 111 beispielsweise eine Mehrzahl von Farbbildaufnahmen 107, als eine Mehrzahl von Sichtfeldern der Probe erstellen, beispielsweise in einer hohen Vergrößerung. Mit anderen Worten kann der Farbbildaufnehmer 111 eine Mehrzahl von Farbaufnahmen 107, beispielsweise eine Mehrzahl von überlappenden Farbaufnahmen 107 aufnehmen und die Vorrichtung 110 kann einzeln für jede Farbaufnahme 107 aus der Mehrzahl der Farbaufnahmen 107 die in der jeweiligen Farbaufnahme 107 vorliegenden relevanten Objekte bestimmen. Der Grauwertbildbereitsteller 112 ist ausgebildet, um ein Grauwertbild 115 basierend auf der Farbaufnahme 107 bereitzustellen. Die Farbaufnahme 107 kann beispielsweise eine RGB-Farbaufnahme sein. Das Bereitstellen des Grauwertbildes kann beispielsweise basierend auf charakteristischen Verhältnissen von Werten in den verschiedenen Farbkanälen der RGB-Farbaufnahmen erfolgen. Gemäß einigen Ausführungsbeispielen kann das Grauwertbild 115 basierend auf den Grün- und Blaukanälen der Farbaufnahme 107 erstellt werden. Beispielsweise kann die Farbaufnahme 107 von dem Grauwertbildbereitsteller 112 mit der Gleichung (1):

$$I_{gb}(x, y) = \arctan\left(\frac{I_{green}(x, y)}{I_{blue}(x, y)}\right) \qquad (1)$$

in das Grauwertbild 115 transformiert werden. $I_{green}$ und $I_{blue}$ sind hierbei die Grün- und Blaukanäle der Farbaufnahme 107. (x, y) beschreiben dabei Koordinatenpositionen eines Bildpunkts der Farbaufnahme 107. $I_{gb}$ ist das Grauwertbild 115.

Der Binärbildbereitsteller 113 ist ausgebildet, um ein Binärbild 104 basierend auf dem Grauwertbild 115 der Farbaufnahme 107 so bereitzustellen, dass die zusammenhängenden Regionen in dem Binärbild 104 einen Vordergrund des Binärbilds 104 bilden. Mit anderen Worten ist der Binärbildbereitsteller 113 ausgebildet, um das Grauwertbild 115 in ein Bild mit einer Mehrzahl aus zusammenhängenden Regionen zu überführen, wobei Bildpunkte der zusammenhängenden Regionen, welche den Vordergrund des Binärbilds 104 bilden alle denselben Binärwert aufweisen. Mit anderen Worten ist der Binärbildbereitsteller 113, um durch eine Farb-zu-Graustufenabbildung der Farbaufnahme 107 ein das Grauwertbild 115 zu erzeugen, und aus dem Grauwertbild 115 das Binärbild 104 zu erzeugen.

Wie aus Fig. 1b ersichtlich kann der Binärbildbereitsteller 113 einen Grauwertbildverstärker 116, einen Bildwandler 117 und einen Regionenfinder 118 aufweisen.

Der Grauwertbildverstärker 116 ist ausgebildet, um das Grauwertbild 115 einer Filterung zu unterziehen, um als Ergebnis der Filterung ein verstärktes Grauwertbild 119 zu erhalten. Das verstärkte Grauwertbild 119 kann auch als gefiltertes Grauwertbild 119 bezeichnet werden. Der Grauwertbildverstärker 116 kann die Filterung derart ausführen, dass ein Kontrast zwischen Bereichen der Farbaufnahme 107, in welchen die zu bestimmenden Objekte liegen und Bereichen der Farbaufnahme 107, in welchen die zu bestimmenden Objekte nicht liegen verstärkt in dem verstärkten Grauwertbild 119 gegenüber dem Grauwertbild 115 ist. Mit anderen Worten kann der Grauwertbildverstärker 116 durch Anwendung einer Filterung auf das Grauwertbild 115 Unterschiede zwischen den zu bestimmenden Objekten in der Farbaufnahme 107 und nicht zu bestimmenden Objekten verstärken. Durch diese Verstärkung können nachfolgende Stufen eine bessere Unterscheidung zwischen Bereichen der Farbaufnahme 107, in welchen die Objekte liegen und Bereiche der Farbaufnahme 107 in welchen die Objekte nicht liegen treffen.

Der Bildwandler 117 ist ausgebildet, um basierend auf dem verstärkten Grauwertbild 119 einen Schwellwert zu bestimmen um basierend auf dem bestimmten Schwellwert in Verbindung mit dem verstärkten Grauwertbild 119 das Binärbild 104 bereitzustellen. Der Bildwandler 117 kann dabei beispielsweise ein (einstufiges) Otsu-Verfahren auf das verstärkte Grauwertbild 119 oder ein anderes bimodales Schwellwertverfahren anwenden, um das Binärbild 104 zu erhalten. Das Binärbild 104 weist, wie im Vorherigen bereits beschrieben, dann lediglich Bildpunkte auf, welche entweder einen ersten logischen Binärwert oder einen zweiten logischen Binärwert aufweisen. Wie bereits beschrieben, weisen die Bildpunkte der von dem Identifizierer 101 identifizierten zusammenhängenden Regionen alle denselben logischen Binärwert auf. Diese Bildpunkte bilden typischerweise den Vordergrund des Binärbilds 104, während die restlichen Bildpunkte, mit dem anderen logischen Binärwert den Hintergrund des Binärbilds 104 bilden. Der Identifizierer 101 kann das von dem Bildwandler 117 bereitgestellte Binärbild 104 empfangen, um in diesem Binärbild zusammenhängende Regionen zu identifizieren, deren Größe und/oder Form einer vorbestimmten Bedingung entsprechen. Da die zusammenhängenden Regionen in dem Binärbild 104 typischerweise als eine Mehrzahl von Bildpunkten vorliegen, kann der Identifizierer 101 benachbarte Bildpunkte des selben Binärwerts oder über Bildpunkte des selben Binärwerts verbundene Bildpunkte des selben Binärwerts in die zusammenhängenden Gruppen gruppieren, um diese dann basierend auf ihrer Form und/oder Größe zu identifizieren.

Gemäß weiteren Ausführungsbeispielen, wie dies beispielhaft in der Vorrichtung 110 in Fig. 1b gezeigt ist, kann der Binärbildbereitsteller 113 aber auch den Regionenfinder 118 aufweisen, welcher in dem Binärbild 104 angrenzende Bildpunkte desselben Binärwerts und über Bildpunkte desselben Binärwerts miteinander verbundene Bildpunkte desselben Binärwerts jeweils zu einer zusammenhängenden Region zusammenfasst, so dass Bildpunkte der Mehrzahl der zusammenhängenden Regionen, welche den Vordergrund des Binärbilds 104 bilden, in dem Binärbild 104 den selben Binärwert aufweisen. Der Regionenfinder 118 kann dazu dem Identifizierer 101 beispielsweise das Binärbild 104 in Verbindung mit Metadaten 120 bereitstellen, welche angeben, welche in dem Binärbild 104 vorhandenen Bildpunkte zu welcher zusammenhängenden Region gehören. Der Regionenfinder 118 kann dabei beispielsweise einen sogenannten "Connected Component Labeling"-Algorithmus durchführen, um miteinander verbundene Bildpunkte desselben Binärwerts zu zusammenhängenden Regionen zu gruppieren. Der Begriff "Connected Component Labeling" steht dabei für das Benamen von miteinander verbundenen Komponenten.

Zusammenfassend kann der Binärbildbereitsteller 113 ausgebildet ist, um bei der Erzeugung des Binärbilds 104 aus dem Grauwertbild 115, das Grauwertbild 115 einer Hochpass-Filterung zu unterziehen, um als Ergebnis der Filterung das gefiltertes Grauwertbild 119 zu erhalten, aus dem gefilterten Grauwertbild 119 einen Schwellwert zu bestimmen, und, basierend auf dem bestimmten Schwellwert aus dem verstärkten Grauwertbild 119 das Binärbild 104 zu erzeugen. Weiterhin kann der Binärbildbereitsteller 113 ausgebildet sein, um in dem Binärbild 104 denjenigen Anteil, in welchem das Binärbild 104 einen vorbestimmten Binärwert aufweist, in voneinander getrennte, aber in sich zusammenhängende Regionen einzuteilen, die die Mehrzahl von zusammenhängenden Regionen darstellen, unter denen die Identifizierung durchgerührt wird.

Wie bereits erwähnt, kann der Identifizierer 101 basierend auf dem Binärbild 104 in Verbindung mit den Metadaten 120 die zusammenhängenden homogen Regionen identifizieren, deren Größe und/oder Form einer vorbestimmten Bedingung entspricht. Der Identifizierer 101 reduziert damit das Binärbild 104, um das reduzierte Binärbild 106 zu erhalten. Durch das Identifizieren der zusammenhängenden Regionen in dem Binärbild 104 auf Basis deren Größe und/oder Form kann ermöglicht werden, dass (nahezu) keine zu bestimmenden Objekte übersehen werden, es können aber mitunter anderweitige Bildbestandteile fälschlicherweise als zu bestimmende Objekte erkannt werden. Das heißt, das reduzierte Binärbild 106 kann identifizierte zusammenhängende Regionen aufweisen, welche nicht zu bestimmende Objekte oder Teil der zu bestimmenden Objekte sind.

Der Merkmalsextrahierer 102 kann daher Merkmalssätze für die identifizierten zusammenhängenden Regionen, welche in dem reduzierten Binärbild 106 vorliegen aus der Farbaufnahme 107 extrahieren. Wie bereits erwähnt, stellt der Merkmalsextrahierer 102 einen Satz 108 von Merkmalssätzen über die identifizierten zusammenhängenden Regionen bereit. Der Klassifizierer 103 klassifiziert dann basierend auf dem Satz 108 der Merkmalssätze der identifizierten zusammenhängenden Regionen in der Farbaufnahme 107 die identifizierten zusammenhängenden Regionen in eine erste disjunkte Gruppe 109a und eine zweite disjunkte Gruppe 109b. Wie bereits erwähnt, kann der Klassifizierer 103 basierend auf den Merkmalssätzen richtig-positiv identifizierte zusammenhängenden Regionen in die erste disjunkte Gruppe 109a klassifizieren und falsch-positiv identifizierte zusammenhängende Regionen in die zweite disjunkte Gruppe 109b klassifizieren. Mit anderen Worten kann der Klassifizierer 103 die identifizierten zusammenhängenden Regionen so in die disjunkten Gruppen klassifizieren, dass die identifizierten zusammenhängenden Regionen, welche der ersten disjunkten Gruppe 109a zugeordnet sind, die in der Farbaufnahme 107 vorliegenden zu bestimmenden Objekte oder zumindest Teile dieser zu bestimmenden Objekte bilden.

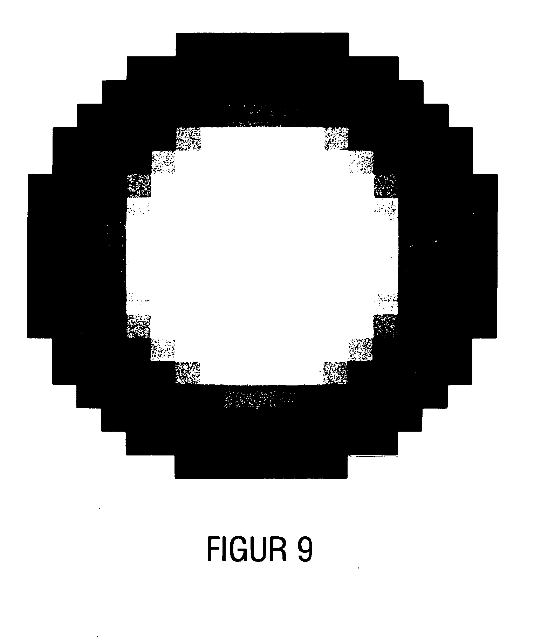

Gemäß einigen Ausführungsbeispielen kann der Grauwertbildverstärker 116 des Binärbildbereitstellers 113 ausgebildet sein, um das Grauwertbild 115 einer sogenannten "Black-Tophat"-Filterung (deutsch: schwarzer Hut - Filterung) zu unterziehen. Eine maximale Fläche eines verwendeten "Black-Tophat" Strukturelements kann dabei derart gewählt werden, das diese mindestens einer Fläche eines größtmöglichen zu bestimmenden Objekt entspricht. Beispielsweise kann ein kreisrundes "Black-Tophat" Strukturelement gewählt werden, dessen Durchmesser einem maximalmöglichen Durchmesser eines zu bestimmenden Objekts entspricht. Ein solch beispielhaftes Strukturelement ist in Fig. 9 gezeigt. Dies Wahl der Fläche des Strukturelements kann analog zu der Wahl der Ausschnitte zur Merkmalsextrahierung, wie sie noch im Folgenden von dem Merkmalsextrahierer 102 ausgeführt werden kann, daher abhängig von dem Typ der zu bestimmenden Objekte gewählt werden, so dass die Fläche des Strukturelements mindestens einer Fläche eines größtmöglichen Objekts dieses Typs entspricht. Beispielsweise kann die Fläche des Strukturelements so gewählt werden, dass sie mindestens einer größtmöglichen Fläche der zu bestimmenden Objekte entspricht, wobei die größtmögliche Fläche der zu bestimmenden Objekte durch die vorbestimmte Bedingung bestimmt ist.

Der Grauwertbildverstärker 116 kann dabei so ausgebildet sein, dass bei dieser "Black-Tophat"-Filterung von dem Grauwertbild 115 eine mit dem zuvor genannten "Black-Tophat" Strukturelement morphologisch geschlossene Kopie des Grauwertbildes 115 abgezogen wird.

Wie aus Fig. 1b ersichtlich kann die Vorrichtung 110 weiterhin einen Charakterisierer 114 aufweisen, welcher ausgebildet ist, um alle in die erste disjunkte Gruppe 109a klassifizierte identifizierte zusammenhängende Regionen in eine Mehrzahl von disjunkten Charakterisierungsgruppen 121a bis 121n, basierend auf den extrahierten Merkmalssätzen für die identifizierten zusammenhängenden Regionen, zu charakterisieren. Mit anderen Worten, kann die Vorrichtung 110 nicht nur ausgebildet sein, um die in der Farbaufnahme 107 vorliegenden Objekte zu finden, sondern auch noch den Typ derer zu bestimmen. Der Charakterisierer 114 kann dabei beispielsweise ausgebildet sein, um diese Charakterisierung basierend auf einer speziell trainierten Referenzdatenbank auf Basis von Formmerkmalen, Texturmerkmalen und/oder Farbmerkmalen durchzuführen.

Gemäß weiteren Ausführungsbeispielen kann die Vorrichtung 110 auch einer Anzeige, beispielsweise einen Monitor umfassen, welcher die bestimmten Objekte anzeigt. Beispielsweise kann die erste disjunkte Gruppe 109a angezeigt werden. Weiterhin können auch die verschiedenen Charakterisierungsgruppen 121a bis 121n angezeigt werden.

Gemäß einigen Ausführungsbeispielen können die zu bestimmenden Objekte Plasmodien sein. Dazu kann beispielsweise die Farbaufnahme 107 eine Farbaufnahme eines Sichtfeldes eines dicken Blutausstrichs sein. Die erste disjunkte Gruppe 109a kann dabei beispielsweise die in der Farbaufnahme 107 vorliegenden richtig-positiv detektierten Plasmodien beschreiben. Die verschiedenen Charakterisierungsgruppen 121a bis 121n können darüber hinaus weiterhin angeben, von welchem Typ das jeweilige richtig-detektierte Plasmodium ist. So kann beispielsweise eine Charakterisierung in Plasmodium falciparum, Plasmodium vivax, Plasmodium ovale und Plasmodium malariae erfolgen, wobei eine Charakterisierungsgruppe aus den Charakterisierungsgruppen 121a bis 121n genau einem dieser genannten Typen entspricht.

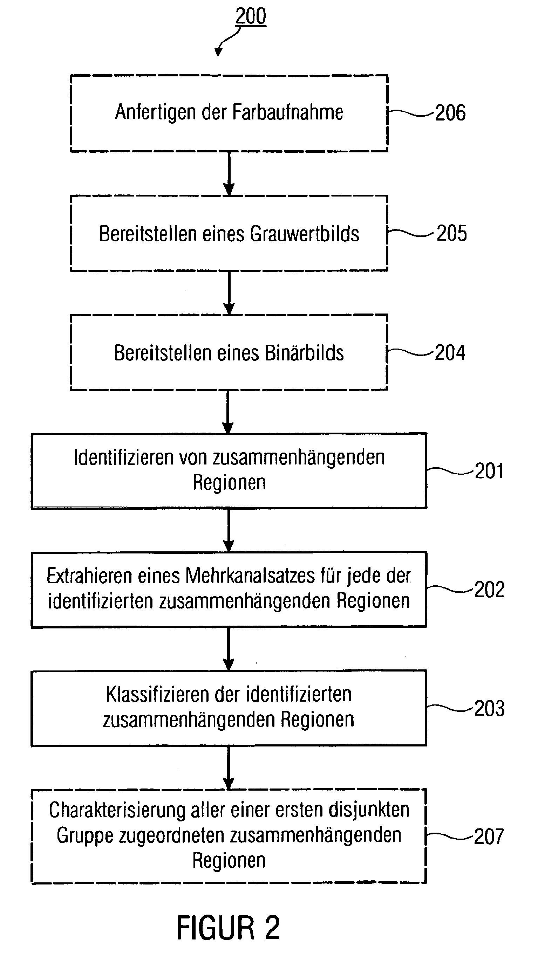

Fig. 2 zeigt ein Flussdiagramm eines Verfahrens 200 zur Bestimmung von Objekten in einer Farbaufnahme.

Das Verfahren 200 weist einen Schritt 201 des Identifizierens aus einer Mehrzahl von, in einem von der Farbaufnahme abgeleiteten Binärbild vorliegenden, zusammenhängenden Regionen, basierend auf einer Größe und/oder Form der zusammenhängenden Regionen, derjenigen zusammenhängenden Regionen, deren Größe und/oder Form einer vorbestimmten Bedingung entspricht.

Weiterhin weist das Verfahren 200 einen Schritt 202 des Extrahierens eines Merkmalssatzes für jede der identifizierten zusammenhängenden Regionen aus der Farbaufnahme auf.

Weiterhin weist das Verfahren 200 einen Schritt 203 des Klassifizierens der identifizierten zusammenhängenden Regionen in zumindest zwei disjunkte Gruppen, basierend auf den extrahierten Merkmalssätzen für die identifizierten zusammenhängenden Regionen, auf.

Das Verfahren 100 kann beispielsweise von der Vorrichtung 100 gemäß Fig. 1a oder der Vorrichtung 110 gemäß Fig. 1b durchgeführt werden. So kann der Schritt 201 des Identifizierens beispielsweise von dem Identifizierer 101 der Vorrichtungen 100, 110 durchgeführt werden. Der Schritt 202 des Extrahierens kann beispielsweise von dem Merkmalsextrahierer 102 der Vorrichtungen 100, 110 durchgeführt werden. Der Schritt 203 des Klassifizierens kann beispielsweise von dem Klassifizierer 103 der Vorrichtungen 100, 110 durchgeführt werden.

Gemäß einigen Ausführungsbeispielen können bei dem Schritt 202 des Extrahierens der Merkmalssätze die Merkmalssätze der identifizierten zusammenhängenden Regionen aus Ausschnitten der Farbaufnahme, welche die jeweiligen identifizierten zusammenhängenden Regionen umgeben und auf diese zentriert sind extrahiert werden. Eine Größe und/oder eine Form der Ausschnitte kann dabei für alle identifizierten zusammenhängenden Regionen gleich sein. Diese Größe und/oder Form der Ausschnitte kann dabei abhängig von dem Typ der zu bestimmenden Objekte sein, beispielsweise können für typischerweise kreisrunde Objekte kreisrunde Ausschnitte verwendet werden und beispielsweise kann eine Größe der Ausschnitte so gewählt werden, dass die Ausschnitte mindestens so groß sind, wie ein größtmögliches zu bestimmendes Objekt.

Gemäß weiteren Ausführungsbeispielen können bei dem Schritt 203 des Klassifizierens der identifizierten zusammenhängenden Regionen die extrahierten Merkmalssätze mit Referenzmerkmalssätzen verglichen werden, um als ein Resultat des Vergleichs jede identifizierte zusammenhängende Region zu genau einer der disjunkten Gruppen zuzuordnen. Diese Referenzmerkmalssätze können beispielsweise durch Trainieren einer Referenzdatenbank erstellt werden. Die Datenbank kann beispielsweise derart erstellt werden, dass ein Anwender per Hand Ausschnitte einer Farbaufnahme als Objekt oder Nicht-Objekt kennzeichnet. Das Verfahren 200 kann daher weiterhin vor dem Schritt des Klassifizierens 203 der identifizierten zusammenhängenden Regionen einen Schritt des Erstellens der Referenzmerkmalssätze aufweisen.

Gemäß weiteren Ausführungsbeispielen kann, wie in Fig. 2 gezeigt, das Verfahren 200 vor dem Schritt 201 des Identifizierens der zusammenhängenden Regionen einen Schritt 204 des Bereitstellens des Binärbilds basierend auf einem Grauwertbild der Farbaufnahme aufweisen. Bei dem Schritt 204 des Bereitstellens des Binärbilds kann das Grauwertbild einer Filterung derart unterzogen werden, dass ein Kontrast zwischen Bereichen der Farbaufnahme in denen die zu bestimmenden Objekte liegen und Bereichen der Farbaufnahme in denen die zu bestimmenden Objekte nicht liegen verstärkt wird, um als Ergebnis der Filterung ein verstärktes Grauwertbild zu erhalten. Weiterhin kann bei dem Schritt 204 des Bereitstellens des Binärbilds das verstärkte Grauwertbild unter Nutzung eines Schwellwertverfahrens in das Binärbild transformiert werden. Weiterhin können bei dem Schritt 204 des Bereitstellens des Binärbilds in dem Binärbild vorliegende Bildpunkte in die Mehrzahl von zusammenhängenden Regionen gruppiert werden. Dieser Schritt kann beispielsweise durch den Regionenfinder 118 gemäß Fig. 1b durchgeführt werden. Der Schritt 204 des Bereitstellens des Binärbilds kann im Allgemeinen durch den Binärbildbereitsteller 113 gemäß Fig. 1b durchgeführt werden.

Weiterhin kann das Verfahren 200 vor dem Schritt 204 des Bereitstellens des Binärbilds einen Schritt 205 des Bereitstellens des Grauwertbilds aufweisen. Bei diesem Schritt 205 des Bereitstellens des Grauwertbilds kann die Farbaufnahme, basierend auf mindestens zwei ihrer Farbkanäle, in das Grauwertbild transformiert werden. Dieser Schritt 205 des Bereitstellens des Grauwertbilds kann beispielsweise durch den Grauwertbildbereitsteller 112 gemäß Fig. 1b durchgeführt werden.

Weiterhin kann das Verfahren 200 einen Schritt 206 des Anfertigens der Farbaufnahme aufweisen. Dieser Schritt des Anfertigens der Farbaufnahme kann beispielsweise durch den Farbbildaufnehmer 111 gemäß Fig. 1b durchgeführt werden. In diesem Schritt 206 des Anfertigens der Farbaufnahme kann beispielsweise ein Bild eingescannt und in digitaler Form als die Farbaufnahme bereitgestellt werden oder es kann, beispielsweise mit einer Kamera, ein Foto gemacht werden und dieses digital als Farbaufnahme bereitgestellt werden.

Weiterhin kann das Verfahren 200 nach dem Schritt 203 des Klassifizierens der identifizierten zusammenhängenden Regionen einen Schritt 207 des Charakterisierens aller, einer ersten der beiden disjunkten Gruppen zugeordneten, identifizierten zusammenhängenden Regionen in eine Mehrzahl von disjunkten Charakterisierungsgruppen, basierend auf den extrahierten Merkmalssätzen für die identifizierten zusammenhängenden Regionen, aufweisen. Dieser Schritt 207 des Charakterisierens kann beispielsweise durch den Charakterisierer 114 gemäß Fig. 1b durchgeführt werden.

Die in dem Flussdiagramm in Fig. 2 gestrichelt dargestellten Schritte des Verfahrens 200 können optionale Schritte des Verfahrens 200 darstellen. Das heißt gemäß einigen Ausführungsbeispielen kann die Farbaufnahme bereits vorliegen und wird nicht erst in einem Schritt des Verfahrens 200 angefertigt. Weiterhin kann auch das Grauwertbild (auch bezeichnet als Graustufenbild) bereits vorliegen und wird nicht erst in einem Schritt des Verfahrens 200 bereitgestellt. Weiterhin kann auch das Binärbild mit den zusammenhängenden Regionen bereits vorliegen und wird nicht erst in einem Schritt des Verfahrens 200 bereitgestellt. Gemäß weiterer Ausführungsbeispielen kann auch eine Charakterisierung der der ersten disjunkten Gruppe zugeordneten zusammenhängenden Regionen unterbleiben, beispielsweise wenn nur nach einer Anzahl der in der Farbaufnahme vorliegenden Objekte gefragt ist, aber nicht nach dem Typ dieser. Die in Fig. 2 mit gestrichelten Linien dargestellten Schritte des Verfahrens 200 stellen daher lediglich optionale Erweiterungen des Verfahrens 200 dar, welche eine Funktionalität des Verfahrens 200 erweitern.

Wie auch schon die Vorrichtung 110 gemäß Fig. 1b so kann auch das Verfahren 200 zur Bestimmung von Plasmodien in einer Farbaufnahme verwendet werden. Die Farbaufnahme kann dabei beispielsweise zumindest einen Teilbereich eines dicken Blutausstrichs, in dem die zu bestimmenden Plasmodien vorliegen, erfassen. Oder mit anderen Worten kann die Farbaufnahme ein Sichtfeld des dicken Blutausstrichs bilden. Das Verfahren 200 kann daher für jedes aufgenommene Sichtfeld des dicken Blutausstrichs durchgeführt werden, um alle in dem dicken Blutausstrich vorliegenden Plasmodien bestimmen zu können. Gemäß weiterer Ausführungsbeispielen können für jedes Sichtfeld des Blutausstrichs mindestens drei Farbaufnahmen dieses Sichtfelds angefertigt werden, beispielsweise in drei verschiedenen Fokusebenen, wobei das Verfahren 200 für jede Farbaufnahme jeder Fokusebene durchgeführt werden kann.

Weitere Ausführungsbeispiele der vorliegenden Erfindung beschreiben ein Verfahren zur Bestimmung von Plasmodien in einem dicken Blutausstrich. Dieses Verfahren kann einen Schritt des Anfertigens eines dicken Blutausstrichs auf einem Objektträger aufweisen.

Weiterhin kann dieses Verfahren einen Schritt der Lokalisation des dicken Blutausstrichs auf dem Träger aufweisen. Dieser Schritt der Lokalisation kann beispielsweise durch Anfertigen einer Aufnahme des Trägers und durch ein anschließendes Schwellwertverfahren auf diese Aufnahme durchgeführt werden.

Weiterhin kann dieses Verfahren einen Schritt des Anfertigens einer Mehrzahl von Farbaufnahmen von dem dicken Blutausstrich aufweisen. Jede dieser Farbaufnahmen erfasst damit zumindest einen Teilbereich des dicken Blutausstrichs. Diese Farbaufnahmen können sich beispielsweise teilweise überlappen.

Weiterhin kann dieses Verfahren einen Schritt der Bestimmung der in jeder Farbaufnahme vorliegenden Plasmodien unter Anwendung des Verfahrens 200, für jede Farbaufnahme aufweisen. Die zu bestimmenden Objekte des Verfahrens 200 sind dabei die in der jeweiligen Farbaufnahme vorliegenden Plasmodien.

Wie bereits beschrieben, können bei dem Schritt des Anfertigens der Mehrzahl von Farbaufnahmen für jeden von einer Farbaufnahme erfassten Teilbereich des dicken Blutausstrichs mehrere (beispielsweise drei) Farbaufnahmen, welche den selben Teilbereich erfassen aber unterschiedliche Fokusebenen aufweisen angefertigt werden. Das Verfahren 200 kann damit drei Mal oder entsprechend der Anzahl der Fokusebenen für jeden Teilbereich des dicken Blutausstrichs durchgeführt werden. Dies ermöglicht auch bei einer hohen Vergrößerung eine sichere Detektion der in diesem Teilbereich vorliegenden Plasmodien.

Gemäß weiteren Ausführungsbeispielen kann dieses Verfahren weiterhin nach dem Schritt des Bestimmens der in jeder Farbaufnahme vorliegenden Plasmodien einen Schritt des Anfertigens eines dünnen Blutausstrichs und Bestimmens der in dem dünnen Blutausstrich vorliegenden Plasmodien aufweisen.

Ausführungsbeispiele der vorliegenden Erfindung schaffen damit ein Verfahren, welches basierend auf der Bestimmung von Plasmodien in einem dicken Blutausstrich und der anschließenden Bestimmung von Plasmodien in einem dünnen Blutausstrich eine sichere Aussage darüber geben können, ob Plasmodien im Blut vorhanden sind und ermöglichen damit eine sichere automatisierte Detektion von Malaria.

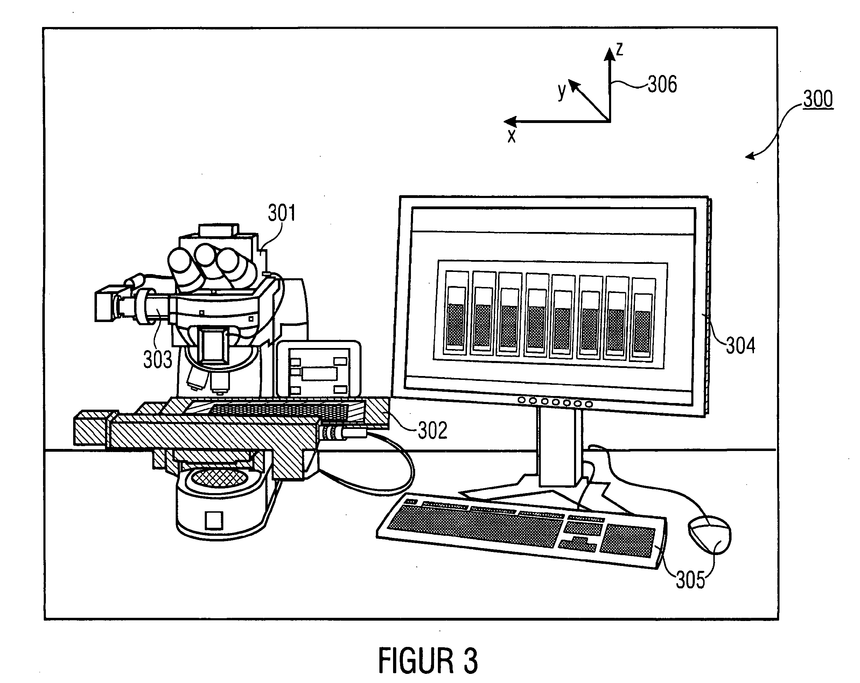

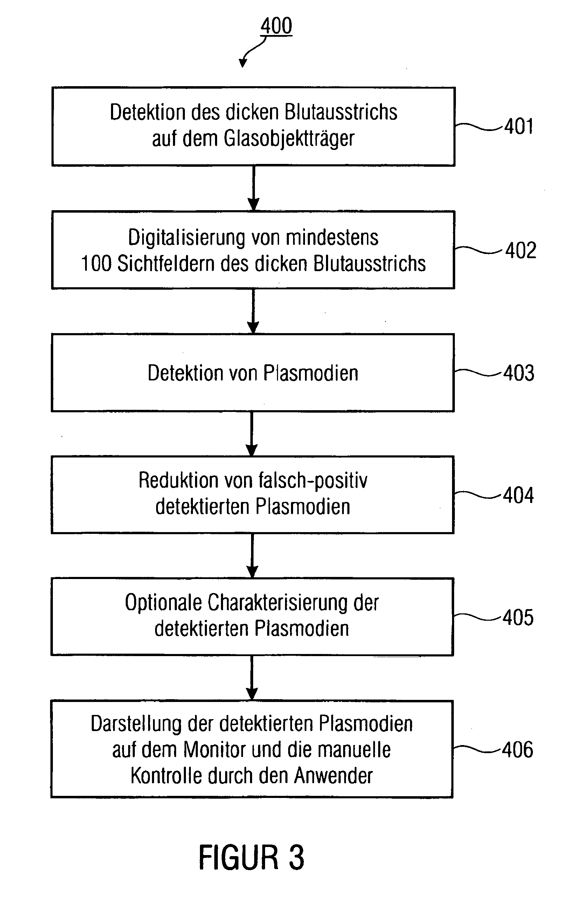

Fig. 3 zeigt ein Bild eines CAM-Systems 300 gemäß einem Ausführungsbeispiel der vorliegenden Erfindung. Das CAM-System 300 kann beispielsweise eine konkrete Ausführung der Vorrichtung 100 gemäß Fig. 1a oder der Vorrichtung 110 gemäß Fig. 1b sein. Das CAM-System 300 kann beispielsweise das Verfahren 200 durchführen. Weiterhin kann das CAM-System 300 das im Vorherigen erwähnte Verfahren zur Bestimmung von Plasmodien in dem dicken Blutausstrich durchführen. Mit anderen Worten kann das in Fig. 3 gezeigte CAM-System 300 für die computerassistierte Mikroskopie die mikroskopische Suche nach Plasmodien in dicken Blutausstrichen automatisieren. Mit Hilfe dieses CAM-Systems 300 kann der Arbeitsaufwand für die mikroskopische Suche nach Plasmodien in dicken Blutausstrichen reduziert und die Qualität der Befundung erhöht werden.

Das in Fig. 3 gezeigte CAM-System 300 weist ein automatisiertes Mikroskop 301, eine automatisierte XY-Bühne 302, eine digitale Kamera 303, ein Beleuchtungssystem (in Fig. 3 nicht gezeigt), einen Rechner (in Fig. 3 nicht gezeigt), einen Monitor 304 und Eingabegeräte 305 auf.

Die Kamera 303 kann dabei in Verbindung mit dem automatisierten Mikroskop 301 und der XY-Bühne 302 den Farbbildaufnehmer 111 gemäß Fig. 1b bilden und beispielsweise den Schritt 206 des Anfertigens der Farbaufnahme des Verfahrens 200 durchführen.

Der Rechner des in Fig. 3 gezeigten CAM-Systems 300 kann den Grauwertbildbereitsteller 112, den Binärbildbereitsteller 113, den Identifizierer 101, den Merkmalsextrahierer 102, den Klassifizierer 103 und den Charakterisierer 114 aufweisen und dementsprechend können die zugehörigen Verfahrensschritte auch auf diesem Rechner des CAM-Systems 300 ausgeführt werden.

Der Monitor 304 kann zur Anzeige der Ergebnisse des Klassifizierers 103 (falls kein Charakterisierer 114 genutzt wird) oder zur Anzeige der Ergebnisse des Charakterisierers 114 genutzt werden.

Das Verfahren zur Bestimmung von Plasmodien in dicken Blutausstrichen soll nun beispielhaft an einem in Fig. 4 gezeigten Verfahren 400 gemäß einem weiteren Ausführungsbeispiel der vorliegenden Erfindung beschrieben werden. Das in Fig. 4 gezeigte CAM-Verfahren 400 umfasst die folgenden Prozessschritte. Details zu diesen Prozessschritten werden im Anschluss erläutert.

Ein erster Schritt 401 des Verfahrens 400 ist die Detektion des dicken Blutausstrichs auf dem Glasobjektträger.

Ein zweiter Schritt 402 des Verfahrens 400 ist die Digitalisierung von mindestens 100 Sichtfeldern des dicken Blutausstrichs.

Ein dritter Schritt 403 des Verfahrens 400 ist die Detektion von Plasmodien.

Ein vierter Schritt 404 des Verfahrens 400 ist die Reduktion von falsch-positiv detektierten Plasmodien.

Ein fünfter Schritt 405 des Verfahrens 400 ist die optionale Charakterisierung der detektierten Plasmodien.

Ein sechster Schritt 406 des Verfahrens ist die Darstellung der detektierten Plasmodien auf dem Monitor und die manuelle Kontrolle durch den Anwender

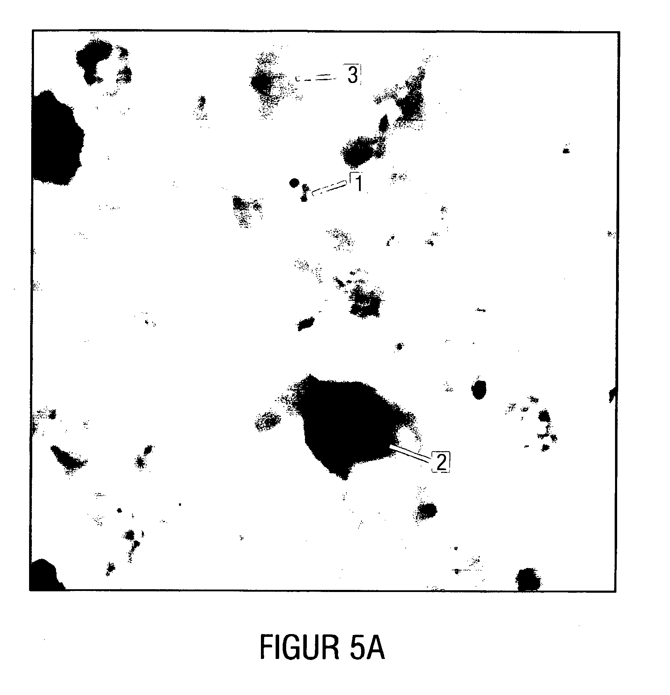

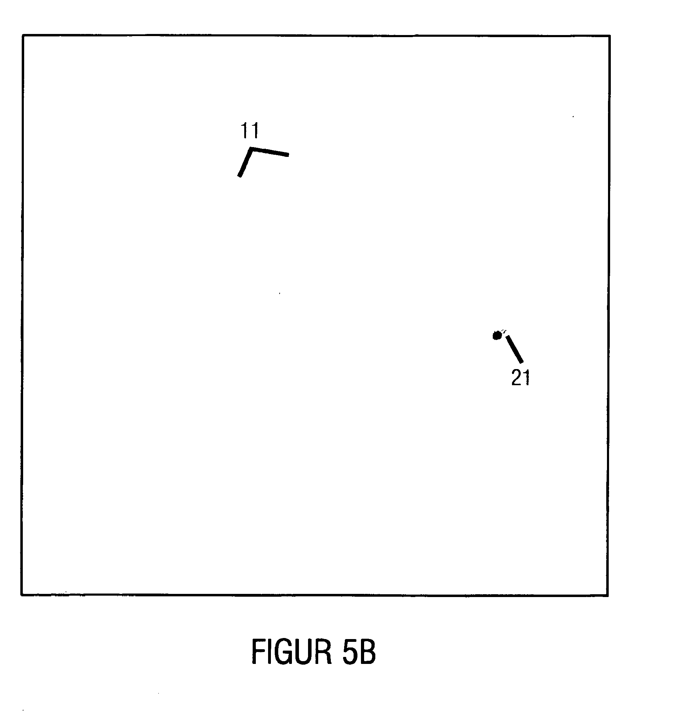

Bevor in dem Schritt 401 des Verfahrens 400 der dicke Blutausstrich auf dem Glasobjektträger detektiert werden kann, wird der dicke Blutausstrich auf dem Glasobjektträger angefertigt. Fig. 5a zeigt eine mikroskopische Aufnahme (mit einem 100-fach Objektiv) eines dicken Blutausstrichs. Im dicken Blutausstrich sind die Zellmembranen der Erythrozyten zerstört und die Erythrozyten sind daher nicht mehr zu erkennen. In der in Fig. 5a vorliegenden Aufnahme sind Plasmodien (mit 1 bezeichnet) und Leukozyten (mit 2 bezeichnet) zu erkennen. Darüber hinaus sind Reste von aufgelösten Erythrozyten zu sehen (mit 3 bezeichnet). Als Vergleichsbeispiel zeigt Fig. 5b eine mikroskopische Aufnahme (mit einem 100-fach Objektiv) eines dünnen Blutausstrichs. Im dünnen Blutausstrich bleiben, im Gegensatz zu dem dicken Blutausstrich, die Zellmembranen der Erythrozyten erhalten und die Erythrozyten (in Fig. 5b mit 11 bezeichnet) bleiben damit klar erkennbar. Plasmodien (in Fig. 5b mit 21 bezeichnet) stellen sich im dünnen Blutausstrich als Einschlüsse in Erythrozyten dar. Um die Aussage treffen zu können, dass zum Zeitpunkt der Blutentnahme keine Plasmodien nachweisbar sind, fordert die Weltgesundheitsorganisation eine Begutachtung von mindestens 100 Sichtfeldern des dicken Blutausstrichs (beispielsweise mit einem 100-fach Objektiv und einem 10-fach Okular). Dies entspricht der Untersuchung von ca. 0,25 $\mu$l Blut. Eine Plasmodiendichte von 4 $\mu$l Blut würde also gerade noch erfasst werden.

Bei dem Schritt 401 der Detektion des dicken Blutausstrichs auf dem Glasobjektträger des Verfahrens 400 kann zunächst in einem automatischen Verfahren (oder Verfahrensschritt) die Position und die Geometrie des dicken

Blutausstrichs auf dem Glasobjektträger bestimmt werden. Dies kann auf Basis von Aufnahmen des Glasobjektträgers in niedriger Vergrößerung (beispielsweise 1 x Objektiv oder 2,5 x Objektiv) erfolgen. Hierzu können automatisch leicht überlappende Aufnahmen des gesamten Glasobjektträgers in niedriger Vergrößerung angefertigt werden. Diese Aufnahmen können beispielsweise durch den Farbbildaufnehmer 111, also durch die in Fig. 3 gezeigte Kamera 303 des CAM-Systems 300 angefertigt werden. Die Verschiebung der XY-Bühne 302 und die Fokussierung (entlang einer Z-Achse) erfolgen dabei automatisiert. Fig. 3 zeigt dazu anhand eines Koordinatensystems 306 die XYZ-Richtungen an. In dem in Fig. 3 gezeigten Bild verläuft die Y-Achse in die Zeichenebene hinein. Mit Hilfe eines einfachen Schwellwerts, (beispielsweise durch Konvertierung der RGB-Farbaufnahmen in Grauwertaufnahmen und der Durchführung eines Schwellwertverfahrens mit einem globalen Schwellwert) kann auf Basis dieser Aufnahmen der Blutausstrich auf dem Objektträger lokalisiert werden. Alternativ zu dem hier beschriebenen Verfahren auf Basis eines Objektives mit niedriger Vergrößerung kann auch eine zusätzliche Kamera am CAM-System 300 (genauer an dem automatisierten Mikroskop 301) angebracht werden, die den gesamten Objektträger überblickt und deren Aufnahme des Objektträgers eine direkte Lokalisierung des Blutausstrichs mittels Schwellwertverfahren erlaubt.

Anschließend können in dem Schritt 402 der Digitalisierung von mindestens 100 Sichtfeldern des dicken Blutausstrichs des Verfahrens 400 mindestens 100 Sichtfelder des dicken Blutausstrichs in hoher Vergrößerung (z. B. mit einem 100-fach Objektiv) digitalisiert werden. Dies kann automatisiert durch das automatisierte Mikroskop 301 erfolgen, indem dieses ein 100-fach Objektiv wählt und die XY-Bühne 302 so steuert, dass die Kamera 303 von jedem Sichtfeld mindestens eine Farbaufnahme aufnimmt. Die Sichtfelder können derart ausgewählt werden, dass eine gleichmäßige Verteilung über den im Vorherigen Schritt 401 lokalisierten dicken Blutausstrichs gewährleistet ist. Hierzu können farbige (RGB)-Einzelaufnahmen erstellt werden. Diese farbigen Einzelaufnahmen können beispielsweise die Farbaufnahmen 107 der Vorrichtung 100, 110 sein. Die Verschiebung der XY-Bühne 302 und die Fokussierung (in Z-Achse) können dabei, wie bereits beschrieben, automatisiert erfolgen. Es wurde herausgefunden, dass die Schärfentiefe von 100-fach Objektiven für dicke Blutausstriche nicht ausreichen kann, daher können gemäß weiteren Ausführungsbeispielen der vorliegenden Erfindung pro Sichtfeld drei Fokusebenen digitalisiert werden, d. h. es können pro Sichtfeld drei Farbaufnahmen erstellt werden, mit jeweils einer eigenen Fokusebene. Diese drei Fokusebenen können sein: die optimale Fokusebene (beispielsweise ermittelt mittels des Brenner Autofokus-Verfahrens) sowie jeweils eine Ebene knapp darüber und eine Ebene knapp darunter.

Der Schritt 402 der Digitalisierung von mindestens 100 Sichtfeldern des dicken Blutausstrichs kann daher in seiner Funktionalität dem Schritt 206 des Anfertigens der Farbaufnahme des Verfahrens 200 entsprechen und weitere optionale Details aufweisen. Die in Fig. 5a gezeigte Aufnahme eines dicken Blutausstrichs kann beispielsweise eine dieser erstellten Einzelaufnahmen sein. Die in Fig. 5a gezeigte Aufnahme kann daher beispielsweise die Farbaufnahme 107 der Vorrichtungen 100, 110 sein.

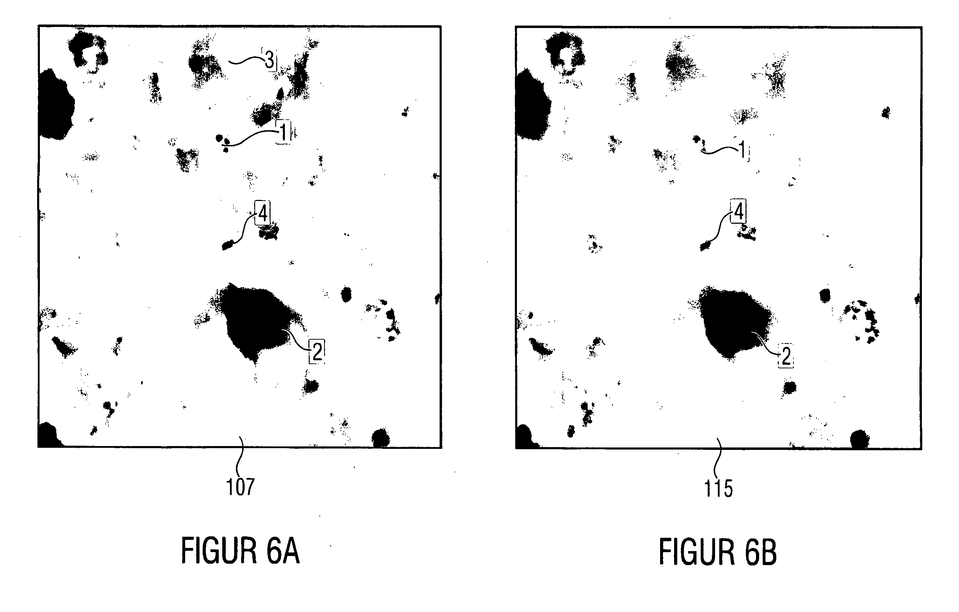

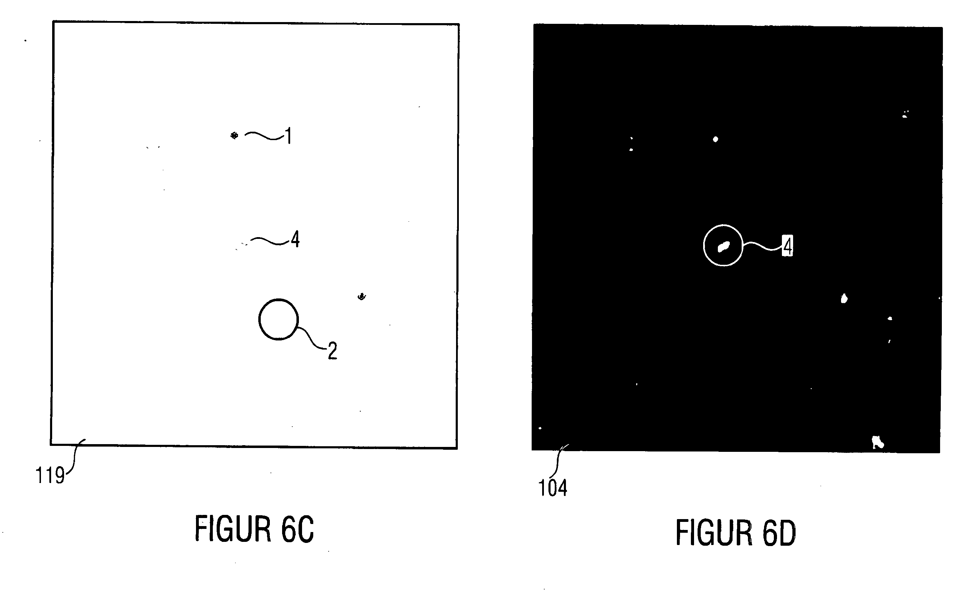

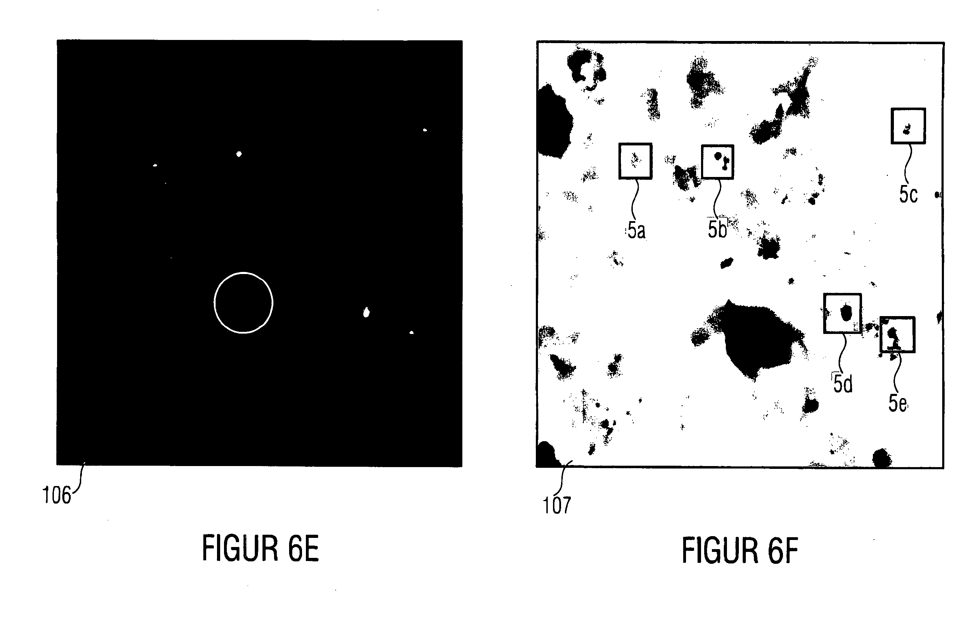

Fig. 6 zeigt anhand einzelner Aufnahmen, wie das Verfahren 400 die in der Farbaufnahme 107 vorliegenden Plasmodien bestimmt.

Fig. 6a zeigt dazu die Farbaufnahme 107, welche in dem Schritt 402 als eine Farbaufnahme eines der mindestens 100 Sichtfelder erstellt wurde. Fig. 6a zeigt damit eine Aufnahme eines Sichtfeldes eines dicken Blutausstrichs in hoher Vergrößerung.

In dem Schritt 403 des Verfahrens 400 der Detektion von Plasmodien erfolgt eine Detektion von Plasmodien in den drei Aufnahmen (in den drei Fokusebenen) der mindestens 100 zuvor digitalisierten Sichtfelder. Die Detektion kann hierbei im Wesentlichen auf Basis der spezifischen Farbgebung von Blutbestandteilen, die einen Zellkern enthalten (wie beispielsweise Plasmodien, Leukozyten und Thrombozyten) erfolgen. Die Segmentierung kann auf dem hierfür charakteristischen Verhältnis der Werte im Grün- und Blaukanal der RGB-Farbaufnahmen basieren. Dazu wird das Farbbild (jede Farbaufnahme) mit der Gleichung (1):

$$I_{gb}(x,y) = \arctan\left(\frac{I_{green}(x,y)}{I_{blue}(x,y)}\right) \qquad (1)$$

in ein Grauwertbild transformiert. $I_{green}$ und $I_{blue}$ sind hierbei die Grün- und Blaukanäle des Eingabebildes (also der jeweiligen Farbaufnahme). $I_{gb}$ ist das resultierende Grauwertbild 115.

Fig. 6b zeigt das Grauwertbild 115, welches basierend auf der oben genannten Gleichung (1) durch Transformation aus der Farbaufnahme 107 resultiert. Mit anderen Worten zeigt

Fig. 6b die Farbaufnahme 107 nach der Umwandlung in das Grauwertbild 115 mittels Gleichung (1).

Die Transformation der Farbaufnahme 107 in das Grauwertbild 115 kann beispielsweise durch den Grauwertbildbereitsteller 112 erfolgen, beispielsweise in dem Schritt 205 des Bereitstellens des Grauwertbildes des Verfahrens 200.

Im derart gewonnenen Grauwertbild 115 kann anschließend eine morphologische Reduktion der Bildanteile erfolgen, die den Hintergrund des Grauwertbildes 115 darstellen (dies können beispielsweise Leukozyten, Thrombozyten und Reste von Erythrozyten sein). Weiterhin kann eine Verstärkung der Bildanteile, die Plasmodien repräsentieren, erfolgen. Dies kann beispielsweise mittels eines morphologischen "Black-Tophat"-Filters (auf Basis eines kreisförmigen, flachen Strukturelements) erfolgen, der kleine dunkle Strukturen hervorhebt. Das Strukturelement kann hierbei derart gewählt werden, dass der Durchmesser des Kreises des Strukturelements dem maximalen Durchmesser von Plasmodien entspricht. Der "Black-Tophat"-Filter kann wie folgt arbeiten: Von dem Grauwertbild 115 wird eine mit dem zuvor genannten Strukturelement morphologisch geschlossene Kopie des Grauwertbildes 115 abgezogen. Das Grauwertbild 115 kann beispielsweise als ein Höhenbild betrachtet werden, wobei ein höherer Grauwert eine große Höhe hat und ein niedriger Grauwert eine niedrige Höhe hat. Dieses Grauwertbild wird mit dem kreisrunden flachen Strukturelement abgefahren, so dass dieses Strukturelement in Löcher fällt, dessen Durchmesser größer als die maximale Größe des Größten zu bestimmenden Plasmodien ist, so dass an diesen Stellen niedrige Werte entstehen und damit Bereiche, welche aufgrund ihrer Größe keine Plasmodien sein können, in der morphologischen Kopie des Grauwertbildes 115 abgeschwächt werden.

Dieses Filtern des Grauwertbildes 115 kann beispielsweise durch den Grauwertbildverstärker 116 der Vorrichtung 110 durchgeführt werden, um als Ergebnis das verstärkte Grauwertbild 119 zu erhalten.

In Fig. 6c ist das verstärkte Grauwertbild 119 gezeigt, welches durch die "Black-Tophat"-Filterung des Grauwertbildes 115 entsteht. Mit anderen Worten zeigt Fig. 6c zeigt das Grauwertbild 115 nach der Reduktion des Hintergrundes und der Hervorhebung der Plasmodien mittels des "Black-Tophat"-Filters als das verstärkte Grauwertbild 119.

In dem verstärkten Grauwertbild 119 in Fig. 6c ist deutlich zu erkennen, dass der in der Farbaufnahme 107 und dem Grauwertbild 105 noch deutlich hervorstechende Leukozyt 2 in dem verstärkten Grauwertbild 119 unterdrückt wurde, während das Plasmodium 1 noch deutlich sichtbar ist, obwohl die Grauwerte des Plasmodiums 1 und des Leukozyten 2 sehr ähnlich sind. Jedoch kann sich hier zu Nutze gemacht werden, dass sich die Größen des Plasmodium 1 und des Leukozyten 2 deutlich unterscheiden.

Um eine Segmentierung der Plasmodien zu erhalten, kann auf dem aus dem "Black-Tophat"-Filter resultierenden verstärkten Grauwertbild 119 ein Schwellwert bestimmt werden. Dies kann automatisiert mit Hilfe des Verfahrens nach Otsu (vgl. dazu auch die Schrift - [OTSU, N.: A threshold selection method from gray level histograms. IEEE Trans. Systems, Man and Cybernetics, 9:62-66, 1979]) erfolgen. Aufgrund der Kanaldivision, welche bei der Transformation der Farbaufnahme 107 in das Grauwertbild 115 mit der Gleichung (1) erfolgt ist, kann dieses Verfahren weitgehend unabhängig von der Beleuchtung sein. Als Resultat dieses Verfahrens erhält man das Binärbild 104.

Fig. 6d zeigt das Binärbild 104, welches durch Anwendung des Schwellwertverfahrens auf das verstärkte Grauwertbild 119 aus Fig. 6c entstanden ist. Mit anderen Worten zeigt Fig. 6d das verstärkte Grauwertbild 119 nach der Segmentierung mittels eines Schwellwertes als das Binärbild 104.

Das Transformieren des verstärkten Grauwertbildes 119 in das Binärbild 104 kann beispielsweise durch den Bildwandler 117 der Vorrichtung 110 erfolgen. Anschließend können zusammenhängende Objekte in dem Binärbild 104 mittels des oben erwähnten "Connected Component Labeling Algorithmus" gefunden werden. Als "Connected Component" bezeichnet man eine Menge von Pixeln, in der jedes Pixel mit allen anderen verbunden ist. Im "Labeling" (deutsch: Namensgebungs) -Prozess werden allen solchen Mengen verschiedene "Labels" (deutsch: Namen) zugewiesen, um diese eindeutig zuordnen zu können. Oder mit anderen Worten werden Bildpunkte desselben Binärwerts, welche aneinander angrenzen oder über Bildpunkte desselben Binärwerts miteinander verbunden sind, jeweils zu einer gemeinsamen zusammenhängenden Region gruppiert. Dieser Schritt des Findens der zusammenhängenden Objekte mittels des "Connected Component Labeling"-Algorithmus kann beispielsweise durch den Regionenfinder 118 der Vorrichtung 110 durchgeführt werden.

Es wurde herausgefunden, dass es sich nicht bei allen derart lokalisierten Objekten (bei allen zusammenhängenden Regionen) um Plasmodien handelt, daher können die gefundenen Objekte (die gefundenen zusammenhängenden Regionen) in einem weiteren Schritt gefiltert werden. Als Plasmodien werden nur diejenigen Objekte (diejenigen zusammenhängenden Regionen) angesehen, deren Größe und/oder Form der derer von Plasmodien entspricht. Dieser Schritt der Auswahl der zusammenhängenden Regionen, deren Größe und/oder Form derer von Plasmodien entspricht, kann beispielsweise durch die Identifizierer 101 der Vorrichtungen 100, 110 durchgeführt werden, beispielsweise in dem Schritt 201 des Identifizierens von zusammenhängenden Regionen des Verfahrens 200.

Fig. 6e zeigt das Binärbild 104 nach der Filterung der detektierten Objekte auf Basis ihrer Form und Größe als ein reduziertes Binärbild 106. Ein sowohl in der Farbaufnahme 107 als auch in dem Grauwertbild 115, dem verstärkten Grauwertbild 119 und dem Binärbild 104 vorhandenes Objekt 4, welches kein Plasmodium darstellt, kann durch diesen Schritt herausgefiltert werden, wie an dem Vergleich aus dem Binärbild 104 mit dem reduzierten Binärbild 106 deutlich wird. In dem reduzierten Binärbild 106 ist das Objekt 4 (markiert durch einen weißen Kreis) nicht mehr vorhanden ist. In dem reduzierten Binärbild 106 sind daher noch fünf Objekte oder zusammenhängende Regionen vorhanden, welche als Plasmodien in Frage kommen. Es wurde herausgefunden, dass die Detektion von Plasmodien auf Basis des vorhergehenden Schritts in einer hohen Sensitivität resultiert, aber einer niedrigen Spezifität. Das heißt, es werden (nahezu) keine Plasmodien übersehen, aber es können mitunter einige (oder in manchen Fällen sogar viele) anderweitige Bestandteile fälschlicherweise als Plasmodium erkannt werden.

Aus diesem Grund kann in dem Schritt 404 der Reduktion von falsch-positiv detektierten Plasmodien des Verfahrens 400 eine Reduktion der falsch-positiven Plasmodien mittels eines Klassifikationsverfahrens erfolgen. Die Klassifikation der zuvor detektierten Plasmodien (der identifizierten zusammenhängenden Regionen) kann dabei in die Klassen (in die beiden disjunkten Gruppen) "Plasmodium" und "kein-Plasmodium" mit einer Support-Vektormaschine (SVM) durchgeführt werden. Diese Klassifikation kann hierbei auf Basis von Form, Textur und/oder Farbmerkmalen, die aus einem das jeweilige Plasmodium (die jeweilige identifizierte zusammenhängende Region) umschließenden Ausschnitts des Farbbildes (der Farbaufnahme 107) extrahiert werden. Dieser Schritt 404 der Reduktion von falsch-positiv detektierten Plasmodien kann beispielsweise durch die Merkmalsextrahierer 102 in Verbindung mit den Klassifizierern 103 der Vorrichtungen 100, 110 erfolgen, beispielsweise in dem Schritt 202 des Extrahierens eines Merkmalssatzes für jede identifizierte zusammenhängende Region und dem Schritt 203 des Klassifizierens der identifizierten zusammenhängenden Regionen des Verfahrens 200.

Die erwähnte Support-Vektormaschine (SVM) kann zuvor mit entsprechenden Merkmalen trainiert worden sein, die aus einer Datenbank mit von Hand als "Plasmodium" oder als "kein-Plasmodium" annotierten Referenzbildausschnitten extrahiert wurden.

Fig. 6f zeigt das Farbbild 107 mit markierten Ausschnitten 5a bis 5e, welche jeweils die identifizierten Regionen, und damit auch die in dem reduzierten Binärbild 106 vorliegenden Objekte umschließen.

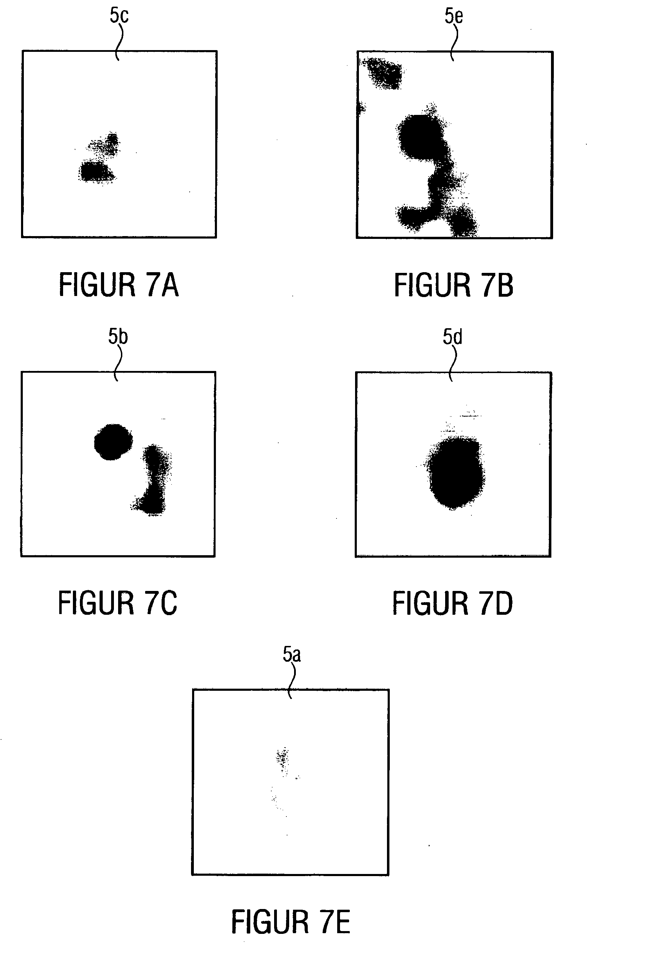

Die Fig. 7a bis 7e zeigen die Ausschnitte 5a bis 5e nochmals in Großaufnahme. Fig. 7a zeigt dabei den Ausschnitt 5c in Großaufnahme, Fig. 7b zeigt den Ausschnitt 5e in Großaufnahme, Fig. 7c zeigt den Ausschnitt 5b in Großaufnahme, Fig. 7d zeigt den Ausschnitt 5d in Großaufnahme und Fig. 7e zeigt den Ausschnitt 5a in Großaufnahme. In anderen Worten illustrieren die Fig. 7a bis 7e den Klassifikationsschritt zur Reduktion von falsch-positiven Plasmodien.

In dem Schritt 403 der Detektion von Plasmodien wurden in dem exemplarischen Beispiel fünf Plasmodien gefunden (sichtbar an den fünf Objekten im reduzierten Binärbild 106). Allerdings sind drei dieser fünf Detektionsergebnisse falsch-positive Plasmodien. Um falsch-positive Plasmodien zu identifizieren, werden daher in dem Schritt 404 der Reduktion von falsch-positiv detektierten Plasmodien zunächst die kleinen Ausschnitte 5a bis 5e aus dem Sichtfeld (aus der Farbaufnahme 107) erstellt, die jeweils auf den detektierten Plasmodien zentriert sind (siehe dazu Fig. 7a bis 7e). Anschließend können aus diesen Bildausschnitten 5a bis 5e Farbe, Textur und/oder Formmerkmale extrahiert werden, und auf deren Basis mittels der Support-Vektormaschine (SVM) die echten Plasmodien von falsch-positiven Detektionen unterschieden werden. In dem vorliegenden Beispiel können auf diese Weise die in den Ausschnitten 5b und 5d vorliegenden Objekte, welche in den Fig. 7c und 7d gezeigt sind, als echte und die in den Ausschnitten 5c, 5e, 5a vorliegenden Objekte, welche in den Fig. 7a, 7b, 7e gezeigt sind, als falsch-positive Plasmodien identifiziert werden. Unter Anwendung der Klassifizierer 103 der Vorrichtung 100, 110 für den Schritt 404 der Reduktion von falsch-positiv detektierten Plasmodien, beispielsweise durch Benutzung des Schritts 203 des Klassifizierens der identifizierten zusammenhängenden Region des Verfahrens 200 können die richtig-positiven Plasmodien der ersten disjunkten Gruppe 109a zugeordnet werden und die falsch-positiven Plasmodien der zweiten disjunkten Gruppe 109b zugeordnet werden.

Anschließend an den Schritt der Reduktion 404 von falsch-positiv detektierten Plasmodien kann das Verfahren 400 den Schritt 405 der (optionalen) Charakterisierung der detektierten Plasmodien aufweisen. In diesem optionalen Arbeitsschritt können die detektierten Plasmodien mittels eines weiteren Klassifikationsverfahrens in die Klassen "Plasmodium falciparum", "Plasmodium vivax", "Plasmodium ovale" und "Plasmodium malariae" eingeteilt werden. Die Klassifikation kann dabei mit einer speziell für diese Aufgabe trainierten Support-Vektormaschine und auf Basis von Form, Textur und/oder Farbmerkmalen erfolgen. Dieser Schritt 405 der (optionalen) Charakterisierung kann in seiner Funktionalität dem Schritt 207 der Charakterisierung aller, einer ersten disjunkten Gruppe zugeordneten zusammenhängenden Regionen des Verfahrens 200 entsprechen und kann beispielsweise durch den Charakterisierer 114 der Vorrichtung 110 ausgeführt werden.

In dem Schritt 406 der Darstellung der detektierten Plasmodien auf dem Monitor und der manuellen Kontrolle durch den Anwender können die detektierten Plasmodien und eine statistische Auswertung auf dem Monitor 304 des CAM-Systems 300 dargestellt werden. Neben den Ausschnittsaufnahmen (beispielsweise den Aufnahmen 7c, 7d der detektierten richtig-positiven Plasmodien) kann jeweils auch die aus der Support-Vektormaschine für die falsch-positiv Reduktion resultierende Klassifikationswahrscheinlichkeit dargestellt werden. Zusätzlich kann die im optionalen Charakterisierungsschritt 405 bestimmte Art des Plasmodiums zusammen mit der zugehörigen Klassifikationswahrscheinlichkeit angezeigt werden (z. B.: Plasmodium vivax 70 %). Auch eine Hochrechnung der Zahl der Plasmodien pro µl Blut kann vom System angezeigt werden. Der Anwender kann die Möglichkeit haben, mittels Drag and Drop Fehldetektion oder Fehlcharakterisierung zu korrigieren. Auf Basis dieser Anzeige kann der Anwender die abschließende Diagnose des vorliegenden Blutausstriches als "von Plasmodien befallen oder als "nicht von Plasmodien befallen" treffen.

Darüber hinaus kann der Anwender aus der Anzeige der detektierten Plasmodien Rückschlüsse auf die vorliegende Anzahl von Plasmodien je µl Blut und auf die vorliegende Plasmodienart (z. B.: Plasmodium falciparum) ziehen.

Zusätzlich kann das System die Darstellung der digitalen Sichtfelder in hoher Vergrößerung auf Wunsch des Anwenders ermöglichen.

Es wurde herausgefunden, dass, da der dicke Blutausstrich nicht fixiert wird, die Form der Plasmodien nicht gut erhalten bleibt. Daher kann das Verfahren 400 weiterhin einen Schritt der Bestimmung der Plasmodien auf Basis eines zusätzlichen dünnen Blutausstrichs aufweisen. Mit anderen Worten, kann die Unterscheidung der unterschiedlichen Arten von Plasmodien zusätzlich auf Basis eines zusätzlichen dünnen Blutausstrichs erfolgen.

Im Folgenden soll anhand der Figuren 9-14 ein weiteres detailliertes Beispiel zur Detektion von Plasmodien in einem dicken Blutaustrich gegeben werden.

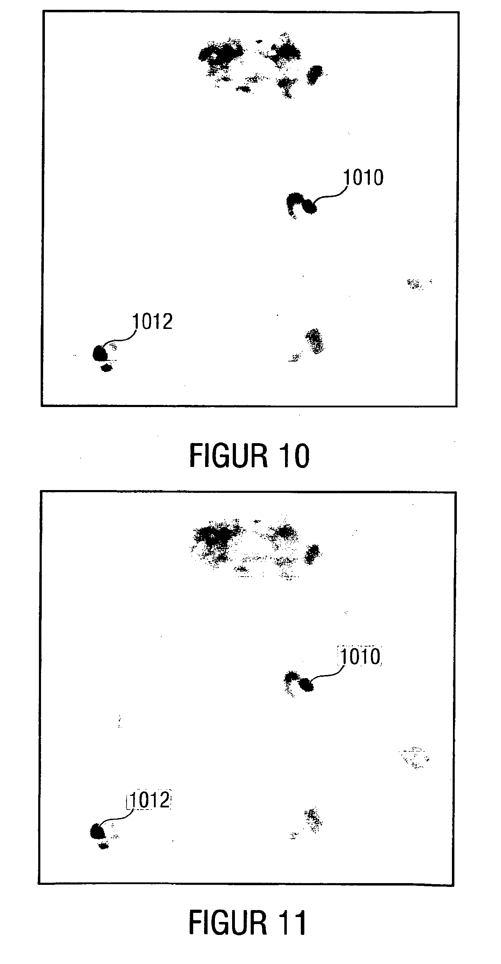

Beispielhaft wurden 256 1000 x 1000 Pixel-Bilder eines Giemsa-gefärbten dicken Blutausstriches mit starker Vergrößerung unter Verwendung eines x100- Ölimmersionsobjektivs mit einer optischen Apertur von 1.3, befestigt an einem Axio Imager-Mikroskop und einer Farb-CCD-Digitalkamera aufgenommen. Für die Sicherstellung konsistenter Beleuchtungsverhältnisse und Weißabgleich wurde für alle Bilder Sorge getragen. Fig. 10 zeigt einen Teil eines Probebildes aus dem Datensatz. Dieser Bildsatz wurde zufällig in zwei Teilsätze (mit jeweils 128 Bildern) zum Trainieren und Testen aufgeteilt. Der Trainingssatz wird für Algorithmusentwicklung, Parameteranpassung, Merkmalselektion und Trainieren eines Klassifizierers (beispielsweise des Klassifizierers 103) eingesetzt. Der Testsatz wird lediglich zur Bewertung der Erfassungsleistung verwendet.

Der Erfassungsalgorithmus gemäß Ausführungsbeispielen besitzt zwei Stufen. Der Fokus der ersten Stufe (Plasmodien-Erfassung, beispielsweis in Form der Schritte 401-403 des Verfahrens 400) liegt in einer großen Erfassungsempfindlichkeit, mit dem Nachteil relativ großer Zahlen falsch-positiver Erfassungen. Die zweite Stufe (Falsch-Positiv-Reduzierung, beispielsweise in Form der Schritte 404-406 des Verfahrens 400) setzt einen SVM-Klassifizierer (SVM = Support Vector Machine = Unterstützungsvektormaschine, beispielsweise der Klassifizierer 103) ein, um die Anzahl falsch-positiver Erfassungen auf einen akzeptablen Pegel zu reduzieren, während die Erfassungsempfindlichkeit der ersten Stufe erhalten bleibt.

Bei der ersten Stufe der Plasmodienerfassung werden Plasmodien-Kandidaten mit Fokus auf großer Empfindlichkeit erfasst, während eine möglicherweise geringe Spezifizität akzeptiert wird. Dies bedeutet, dass der Algorithmus entworfen ist, um keine, oder nur sehr wenige Plasmodien auszulassen, was aber zu falsch-positiven Erfassungen führen kann. Das hier vorgestellte Beispiel konzentriert sich auf die Erfassung auf die Trophozoiten-Wachstumsstufe von Plasmodium falciparum-Parasiten. Trophozoiten erscheinen als kleine Ringe oder Teile von Ringen mit einem oder zwei Chromatin-Punkten. Neben Plasmodien sind Leukozyten und Blutplättchen die einzigen Blutbestandteile, die Chromatin beinhalten. Deshalb besteht der erste Schritt (beispielsweise der Schritt 205 des Verfahrens 200) des Erfassungsalgorithmus darin, chromatinhaltige Objekte zu finden. Es wurde herausgefunden, dass der Anteil der Grün- und der Blau-Komponenten eines Bildes eines Blutausstrichs ein sehr gutes Merkmal zum Identifizieren von chromatinhaltigen Objekten in Giemsa-gefärbten Blutausstrichen ist. Dies ist nicht nur ein stark unterscheidendes Merkmal, sondern auch fast unabhängig von Unterschieden bei Beleuchtungs- und Färbungsintensität. $I_{green}(x,y)$ und $I_{blue}(x, y)$ sollen den Grün- bzw. Blau-Kanal des Eingangsbildes bezeichnen. Das farbige Eingangsbild (die Farbaufnahme 117) wird auf Grundlage von Gleichung 1 (von dem Grauwertbildbereitsteller 112) in ein einfarbiges Bild $I_{gb}(x, y)$ (das Grauwertbild 115) umgewandelt, das chromatinhaltige Objekte hervorhebt.

$$I_{gb}(x,y) = \arctan\left(\frac{I_{green}(x,y)}{I_{blue}(x,y)}\right) \tag{1}$$

Ein Ausschnitt des farbigen Eingangsbilds ist in Fig. 10 gezeigt. In diesem Ausschnitt sind zwei Plamodien 1010, 1012 erkennbar. Fig. 11 zeigt den konvertierten Ausschnitt in das einfarbige Grauwertbild, wobei die Objekte welche Chromatin enthalten, also die Plasmodien 1010, 1012 stärker hervortreten.

In dem resultierenden einfarbigen Bild $I_{gb}(x, y)$ (in dem Grauwertbild 115) besitzen Objekte mit Chromatin dunkle Grauwerte und Objekte, die kein Chromatin beinhalten, helle Grauwerte.

Der nächste Schritt (beispielsweise der Schritt 201 des Verfahrens 200, unter Nutzung des Binärbildbereitstellers 113) des Algorithmus besteht darin, potenzielle Plasmodien von anderen chromatinhaltigen Objekten, wie Leukozyten, Blutplättchen und Artefakten (wie z.B. abgesplitterte Teile von Leukozyten) zu trennen: Plasmodien können auf der Grundlage ihrer charakteristischen Form von Leukozyten getrennt werden. Weiterhin können Sie auf der Grundlage sowohl ihrer charakteristischen Form als auch einer Färbungsintensität von Blutplättchen getrennt werden. Das Trennen der Plasmodien von Artefakten ist schwieriger und wird deshalb in dieser Stufe des Algorithmus noch nicht angegangen. Es wurde herausgefunden, dass der morphologische Black-Top-Hat-Operator ein hervorragender Mechanismus zum Trennen der Plasmodien von sowohl Leukozyten als auch Blut-plättchen ist. Der Black-Top-Hat-Operator ist als ein morphologisches Schließen (morphologische Dilatation (dilation) gefolgt durch morphologische Erosion (erosion)) eines Bildes, gefolgt durch die Subtraktion des geschlossenen Bildes von dem Eingangsbild definiert. Die Verallgemeinerung dieses morphologischen Operators von Binär- zu einfarbigen Bildern und ein spezielles, nicht flaches Strukturierungselement zum Erzielen einer Trennung von Plasmodien von Leukozyten und Blutplättchen werden eingesetzt. Es wurde herausgefunden, dass ein nicht-flaches Strukturierungselement, das ein Paraboloid darstellt, für diese Aufgabe sehr gut geeignet ist. Die Steigung des Paraboloids ist auf einen Pixel und der Radius (der auf der typischen Form von Plasmodien basiert) ist auf sieben Pixel eingestellt. Diese Parameter können für das System festgelegt werden und müssen nur in dem Fall einer Veränderung der Pixelgröße angepasst werden (d. h. wenn die Kamera oder das Objektiv verändert wird). Fig. 9 zeigt das paraboloide Strukturierungselement, wobei in Fig. 9 der Paraboloid einen Radius von neun Pixeln und eine Steigung von einem Pixel aufweist.

Dem Black-Top-Hat-Operator (welcher beispielsweise von dem Grauwertbildverstärker 116 angewandt wird) folgt eine Schwellenoperation (beispielsweise durchgeführt durch den Bildwandler). Es wurde herausgefunden, dass aufgrund der Unabhängigkeit des Anteils der Grün- und der Blau-Komponente in Bezug auf Beleuchtungs- und Färbungsintensität eine globale festgelegte Schwelle für diesen Schritt ausreichend ist.

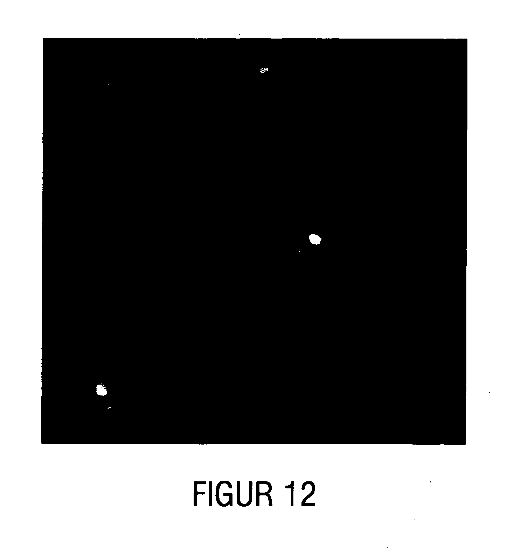

Eine morphologische Erosion mit einem kreisförmigen flachen Strukturierungselement wird angewendet, um benachbarte Punkte in dem Binärbild (das Binärbild 104), die aus der Schwellenoperation resultieren, unter Nutzung des Regionenfinders 118 zusammenzuführen. Der Radius des kreisförmigen Strukturierungselements wird gleich dem Radius des Strukturierungselements, das in dem Black-Top-Hat-Operator eingesetzt wird, gewählt. Der letzte Schritt dieser Erfassungsstufe ist die Extraktion von Positionen von Plasmodien-Kandidaten, unter Nutzung des Identifizierers 101, durch die Verwendung eines einfachen Benennungsalgorithmus verbundener Komponenten (beispielsweise unter Nutzung des Connected Component Algorithms) zum Extrahieren von Objekten aus dem Binärbild 104. Die Schwerpunkte der extrahierten Objekte werden als Positionen von Plasmodien-Kandidaten betrachtet. Die Figuren 10 bis 12 stellen die Hauptschritte der Erfassungsstufe von Plasmodien-Kandidaten dar. In Fig. 12 ist das verstärkte Grauwertbild 119 gezeigt, nachdem der Black Top Hat Operator auf das Grauwertbild 115 angewandt wurde um die Plasmodien Kandidaten zu identifizieren.

Aufgrund des Fokus auf hohe Empfindlichkeit können in der vorherigen Stufe der Plasmodienerfassung erfasste Plasmodien-Kandidaten falsch-positive Erfassungen sein. Deshalb wird als zweite Stufe des Erfassungsalgorithmus ein Falsch-Positiv-Reduzierungsschritt (beispielsweise der Schritt 404 des Verfahrens 400 oder die Schritte 202, 203 des Verfahrens 200, unter Nutzung des Merkmalsextrahierers 102 und des Klassifizierers 103) angewendet. Die Grundidee dieser Stufe besteht darin, eine kleine Region von Interesse (ROI- region of interest) für jeden Plasmodien-Kandidaten aus dem Eingangsbild 107 herauszuschneiden (wie sie in den Fig. 7, 13 und 14 beispielhaft gezeigt sind), einen Satz von Merkmalen 108 aus der ROI zu extrahieren und die ROI basierend auf dem Merkmalssatz 108 als "Plasmodium" oder "Artefakt" zu klassifizieren. Genauer gesagt werden ROIs mit einer Größe von 80 x 80 Pixeln, die mittig auf den Positionen der Plasmodien-Kandidaten sind, aus dem Eingangsbild 107 herausgeschnitten.

In Fig .13 sind Beispiele für in der Stufe der Plasmodienerfassung richtig positiv erfasste Plasmodien-ROIs (sogenannte "Ground-Truth" Plasmodien) gezeigt, während in Fig. 14 Beispiele für in der Stufe der Plasmodienerfassung falsch positiv erfasste Plasmodien-ROIs gezeigt sind.

Anschließend wird ein großer Satz von Merkmalen, unter Nutzung des Merkmalsextrahierer 102 (beispielsweise in dem Schritt 202 des Verfahrens 200), einschließlich statistischer Momentmerkmale, Texturanalysemerkmale und Farbmerkmale (für jede ROI) extrahiert. Der Satz statistischer Momentmerkmale beinhaltet hier zentrale Momente (Mittelwert, Varianz, Schiefe und Wölbung), den Satz sieben unveränderlicher Momente von Hu [siehe auch: M. Hu. Visual pattern recognition by moment invariants. IRE Trans. On Information Theory, IT-8: 179-187, 1962] und die 49 Zernike-Momente mit Größenordnungen bis zu 12 [siehe auch: A. Khotanzad und Y. H. Hongs. Invariant image recognition by zernike moments. IEEE Transactions on Pattern Analysis and Machine Intelligence, 12(5): 489-497, 1990]. Die Texturmerkmale umfassen dreizehn Matrixmerkmale eines gemeinsamen Auftretens von Haralick [siehe auch: R. M. Haralick, K. Shammugam und I. Dinstein. Textural features for image classification. IEEE Transactions on Systems, Man, and Cybertinetics, 3(6): 610-621, 1973], 18 Summen- und Differenz-Histogramm-Merkmale von Unser [siehe auch: M. Unser. Sum and difference histograms for texture classification. IEEE Trans. Pattern Anal. Mach. Intell., 8(1): 118-125, 1986], 16 statistische geometrische Merkmale von Chen [siehe auch: Y. Q. Chen, M. S. Nixon und D. W. Thomas. Statistical geometric features for texture classification. Pattern Recognition, 28(4): 537-552, 1995] und fünf Merkmale, die von Young u.a. [siehe auch: I. T. Young, P. W. Verbeek und B. H. Mayall. Characterization of chromatin distribution in cell nuclei. Cytometry, 7(5): 467-474, Sept. 1986] vorgeschlagen wurden, die die Verteilung von Chromatin in der ROI beschrieben. Die Farbmerkmale umfassen 60 Merkmale, die ein 60-Bin-Histogramm des Farbtonkanals der ROI darstellen, und zwei Merkmale, die von Kovalev u.a. [siehe auch: V. Kovalev, A. Y. Grigoriev und H.-S. Ahn, Robust recognition of white blood cell images. In ICPR ,96: Proceedings of the International Conference on Pattern Recognition (ICPR ,96) Bd. IV-Bd. 7472, S. 371, Washington, DC, USA, 1996, IEEE Computer Society] beschrieben wurden, die Cyan-Verschiebungen in der ROI darstellen. Gemäß weiteren Ausführungsbeispielen kann auch nur ein Teil der oben genannten Merkmale extrahiert werden. Weiterhin können bei weiteren Ausführungsbeispielen auch weitere (hier nicht genannte) Merkmale aus den ROIs extrahiert werden.

Insgesamt besitzt der Merkmalsraum 174 Dimensionen, was eine Auswahl eines Merkmalsteilsatzes erforderlich machen kann, um den Fluch der Dimensionalität ("the curse of dimensionality") zu vermeiden. Ferner sind alle Merkmale genormt, so dass sie einen Mittelwert von 0 und eine Standardabweichung von 1 besitzen.

Ein optimaler Merkmalsteilsatz kann in einem zweistufigen Trainingsverfahren ausgewählt werden. Zuerst wird eine eindimensionale Einstufung angewendet, um nur die 60 Merkmale beizubehalten, die die höchste eindimensionale Unterscheidungsleistung besitzen. Dann wird ein genetischer Algorithmus (GA), wie er von Vafeie und De Jong [siehe auch H. Vafaie und K. D. Jong. Genetic algorithms a tool for feature selection in machine learning. In Proceedings of the 4th International Conference on Tools with Artificial Intelligence, S. 200-204, Arlington, VA, USA, 1992. IEEE Computer Society Press] vorgeschlagen wird, zur automatischen Auswahl eines noch kleineren Merkmalsteilsatzes verwendet.

Die Hauptprobleme bei der Anwendung eines genetischen Algorithmus auf ein spezifisches Problem bestehen darin, eine ausreichend objektive Funktion, sowie eine angemessene Darstellung von Kandidaten-Problemlösungen (Individuen) auszuwählen.

Eine geeignete und einfache Darstellung von Individuen für das Problem des Auswählens eines guten Teilsatzes aus einem Satz von N Merkmalen ist eine binäre Zeichenfolge der Länge N. Wenn das Bit an einer Position i auf 1 gesetzt ist, wobei $0 \leq i \leq N$ gilt, ist das i-te Merkmal in dem Teilsatz, der durch das jeweilige Individuum dargestellt ist, beinhaltet. Um eine Merkmalsauswahlverzerrung zu vermeiden, basiert die Auswahl strikt auf dem Trainingsbildsatz und nicht auf dem Testbildsatz. Sobald ein guter Merkmalsteilsatz (aus den oben genannten 174 Merkmalen) ausgewählt wurde, wird unter Nutzung einer SVM der Klassifizierer 103 basierend auf diesem Merkmalsteilsatz und dem Trainingsdatensatz trainiert, um das 2-Klassen-Klassifizierungsproblem (die Einteilung in die beiden Gruppen 109a, 109b) einer Klassifizierung eines ROI als "Plasmodium" oder "Artefakt" zu lösen. Eine SVM mit einem Radialbasisfunktionskern mit y = 0,125 und einem Kostenfaktor von C = 1,0 kann für diese Aufgabe eingesetzt werden.

Mit anderen Worten wird der Klassifizierer 103 unter Nutzung des Trainingsdatensatzes einmalig trainiert, um den trainierten Klassifizierer 103 dann zur Detektion der in der Farbaufnahme 107 (in welcher die Anzahl der Plasmodien, im Gegensatz zu dem Trainingsdatensatz nicht bekannt ist) vorliegenden Plasmodien zu verwenden. In der Trainingsphase des Klassifizierers 103 werden die oben genannten 174 Merkmale hinsichtlich ihrer diskriminierenden Eigenschaften auf dem Trainingsdatensatz bewertet und die 60 besten Merkmale übernommen. Aus den 60 Merkmalen wird wiederrum mittels des Genetischen Algorithmus ein kleiner Teil selektiert. Auf diesem kleinen Teil (der ausgewählte Merkmalsteilsatz) wird der Klassifizierer 103 mit der SVM trainiert.

Für den (späteren) Einsatz des Klassifizierers 103 zu Detektion von Plasmodien (beispielsweise in der Farbaufnahme 107) kann dann nur noch dieser ausgewählte Merkmalsteilsatz (von dem Merkmalsextrahierer 102) aus den ROIs extrahiert werden. Dementsprechend kann in der Trainingsphase auch der Merkmalsextrahierer 102 eingestellt werden, um nur diesen ausgewählten Merkmalsteilsatz aus den ROIs zu extrahieren.

Die Leistung des zweistufigen Plasmodien-Erfassungsalgorithmus kann wie folgt bewertet werden. Ein Satz von 266 ROIs mit 80 x 80 Pixeln, die alle kommentierte Ground-Truth-Plasmodien beinhalten, die in dem Trainingsdatensatz vorhanden sind, wird extrahiert. Ferner wird die erste Stufe des Erfassungsalgorithmus auf den Trainingsdatensatz angewendet, um einen Satz von 612 ROIs mit 80 x 80 Pixeln zu erhalten, welche falsch-positive Erfassungen zeigen. Das Trainieren der zweiten Stufe des Erfassungsalgorithmus basiert auf diesen ROI-Sätzen. Exemplarische ROIs sind in den Figuren 13 und 14 gezeigt.

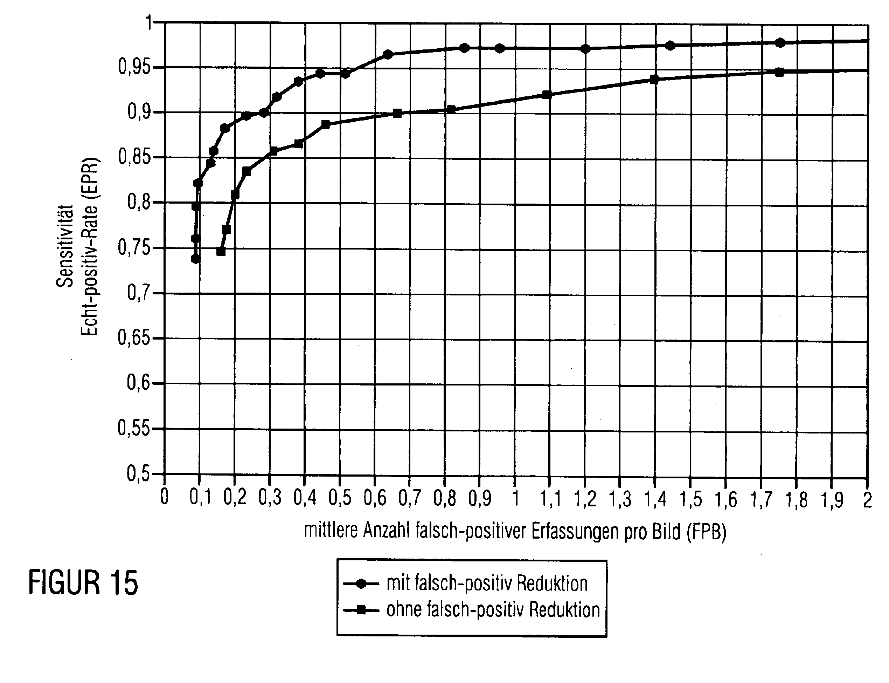

Ein Merkmalssatz wird aus jeder ROI extrahiert und ein optimaler Merkmalsteilsatz erhalten, wie in dem vorherigen Abschnitt beschrieben wurde. Dann wird die SVM basierend auf den Merkmalsteilsätzen der 266 Ground-Truth-Plasmodien und der 612 falsch-positiven Erfassungen, die aus dem Trainingsdatensatz extrahiert werden, trainiert. Die Bewertung der Erfassungsleistung basiert auf dem Testdatensatz. Die erste Stufe des Erfassungsalgorithmus wird auf alle Bilder des Testsatzes angewendet, um Positionen von Plasmodien-Kandidaten zu erhalten. Jeder Plasmodien-Kandidat wird durch einen Merkmalsvektor dargestellt, der aus einer ROI extrahiert wird, die mittig an der erfassten Position ist, und unter Verwendung der SVM klassifiziert. Plasmodien-Kandidaten, die als "Artefakt" klassifiziert werden, werden als falsch-positive Erfassungen betrachtet und verworfen. Die verbleibenden Kandidaten werden als Plasmodien betrachtet. Die Ground-Truth-Segmentierungen des Testdatensatzes werden verwendet, um jede Erfassung als echt positiv (EP) oder falsch positiv (FP) zu identifizieren. Die Echt-Positiv-Rate (EPR), auch Sensitivität bzw. Empfindlichkeit genannt, und die mittlere Anzahl falsch-positiver Erfassungen pro Bild (FPB) werden basierend auf diesen Werten berechnet. Paare von EPR- und FPB-Werten können durch die Verwendung unterschiedlicher Werte für den Schwellenparameter der ersten Erfassungsstufe erhalten werden. Die EPR- und FPB-Paare sind in Fig. 15 als eine FROC-Kurve (FROC = Free Response Receiver Operating Characteristic = frei ansprechende Empfänger-Betriebscharakteristik) abgebildet. Zur Untersuchung der Auswirkungen der Falsch-Positiv-Reduzierungsstufe werden die EPR- und FPB-Paare für den gleichen Aufbau ebenso abgebildet, jedoch mit deaktivierter Falsch-Positiv-Reduzierung. Bei einer vernünftigen Empfindlichkeit von 0,97 arbeitet der Algorithmus ohne Falsch-Positiv-Reduzierung mit 3,2 FPB und 0,8 FPB mit Falsch-Positiv-Reduzierung.

Ausführungsbeispiele stellen daher einen zweistufigen Algorithmus für die automatische Erfassung von Plasmodien in dicken Blutausstrichen bereit. Ausgewählte Ausführungsbeispiele konzentrieren sich auf die Erfassung von Plasmodium falciparum-Parasiten, da diese Art für etwa 80% aller Malariafälle und für etwa 90% aller Todesfälle durch Malaria verantwortlich ist. Im Gegensatz zu den in der Einleitung genannten Schriften geht der Ansatz das Problem einer genauen Plasmodien-Erfassung im Falle niedriger Plasmodien-Dichten (weniger als fünf Plasmodien pro Bild) an. Die Ergebnisse zeigen, dass eine hohe Plasmodien-Erfassungsempfindlichkeit (0,97) kombiniert mit niedrigen Zahlen von Falsch-Positiv-Erfassungen pro Bild (0,8) erzielt werden kann. Dies zeigt, dass der Ansatz für die Entwicklung eines automatisierten Mikroskops zum computergestützten Malaria-Screening geeignet ist. Gemäß den WHO-Richtlinien sollen zur Malariaerfassung 100 stark vergrößerte Felder eines dicken Blutausstrichs untersucht werden. Dieser ermüdende und zeitaufwendige Vorgang könnte auf eine weniger zeitaufwendige Untersuchung der ROIs zur Erfassung von Plasmodien-Kandidaten, die durch den vorgestellten Algorithmus ausgegeben werden, reduziert werden.

Zusammenfassend lässt sich feststellen, dass Malaria durch einen Blutparasiten der Gattung Plasmodium verursacht wird und jedes Jahr Millionen von Menschen tötet. Nach Angaben der Weltgesundheitsorganisation besteht der Standard zur Diagnose von Malaria in der mikroskopischen Untersuchung eines gefärbten Blutausstrichs. Entwickelt wurde ein zweistufiger Algorithmus zur automatischen Erfassung von Plasmodien in dicken Blutausstrichen. Der Fokus der ersten Stufe (beispielsweise in Form des Schritts 403 des Verfahrens 400) liegt auf einer hohen Erfassungsempfindlichkeit, während große Zahlen von falsch-positiven Erfassungen pro Bild akzeptiert werden. Die zweite Stufe (beispielsweise in Form des Schritts 404 des Verfahrens 400) reduziert die Zahl falsch-positiver Erfassungen auf ein akzeptables Niveau, während die Erfassungsempfindlichkeit der ersten Stufe beibehalten wird. Der Algorithmus kann Plasmodien mit einer Empfindlichkeit von 0,97 mit einer durchschnittlichen Anzahl von 0,8 falsch-positiven Erfassungen pro Bild erfassen. Die Ergebnisse hierbei legen nahe, dass der vorgeschlagene Algorithmus für die Entwicklung eines automatisierten Mikroskops zum computergestützten Malaria-Screening geeignet ist. Vorrichtungen und Verfahren gemäß Ausführungsbeispielen können daher zu einer effektiveren automatischen Identifikation von Malaria beitragen.

Ausführungsbeispiele der vorliegenden Erfindung stellen damit einen Lösungsansatz für das Problem der automatischen Diagnose von Malaria auf Basis dicker Blutausstriche und konkreter für die automatische Detektion von Plasmodien in dicken Blutausstrichen dar. Ausführungsbeispiele der vorliegenden Erfindung erlauben damit im Gegensatz zu der im einleitenden Teil dieser Anmeldung gezeigten Verfahren die computerassistierte Diagnose von Malaria bereits in frühen Stadien.

Ausführungsbeispiele der vorliegenden Erfindung schaffen damit ein Verfahren und ein System für die computerassistierte Mikroskopie zur automatischen Detektion von Plasmodien im dicken Blutausstrich.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Gemäß obigen Ausführungsbeispielen wird u.a. eine Vorrichtung zur Bestimmung von Objekten einer Farbaufnahme mit einem Identifizierer 101, welcher ausgebildet ist, um aus einer Mehrzahl von in einem von der Farbaufnahme 107 basierend auf einem Verhältnis von Grünkomponenten zu Blaukomponenten in der Farbaufnahme 107 abgeleiteten Binärbild 104 vorliegenden, zusammenhängenden Regionen, welche chromatinhaltigen Objekten entsprechen, basierend auf einer Größe oder einer Form der zusammenhängenden Regionen, die zusammenhängenden Regionen zu identifizieren, deren Größe oder Form einer vorbestimmten Bedingung entspricht; einem Merkmalsextrahierer 102 zum Extrahieren eines Merkmalssatzes 108 für jede der identifizierten zusammenhängenden Regionen aus der Farbaufnahme 107; einem Klassifizierer 103 zum Klassifizieren der identifizierten zusammenhängenden Regionen in zumindest zwei disjunkte Gruppen 109a, 109b, basierend auf den extrahierten Merkmalssätzen 108 für die identifizierten zusammenhängenden Regionen beschrieben, wobei die zu bestimmenden Objekte Plasmodien sind und die Farbaufnahme 107 ein Sichtfeld zumindest eines Teils eines dicken Blutausstrichs ist.

Der Merkmalsextrahierer 102 kann so ausgebildet sein, dass die extrahierten Merkmalssätze 108 mindestes eines der folgenden Merkmale über die zugehörigen identifizierten zusammenhängenden Regionen umfassen: Formmerkmale, Texturmerkmale, Farbmerkmale; und der Klassifizierer 103 kann ausgebildet sein, um die identifizierten zusammenhängenden Regionen in die disjunkten Gruppen 109a, 109b basierend auf den umfassten Merkmalen zu klassifizieren.

Die Vorrichtung kann ferner einen Binärbildbereitsteller 113 aufweisen, welcher ausgebildet ist, um durch eine Farb-zu-Graustufenabbildung der Farbaufnahme 107 ein Grauwertbild 115 zu erzeugen, und aus dem Grauwertbild 115 das Binärbild 104 zu erzeugen.

Die Vorrichtung kann ferner einen Grauwertbildbereitsteller 112 aufweisen, welcher ausgebildet ist, um das Grauwertbild 115, basierend auf einem Grün-Kanal und einem Blau-Kanal der Farbaufnahme 107 bereitzustellen.

Gemäß obigen Ausführungsbeispielen wird u.a. ein Verfahren zur Bestimmung von Objekten in einer Farbaufnahme 107 mit Identifizieren 201 aus einer Mehrzahl von, in einem von der Farbaufnahme basierend auf einem Verhältnis von Grünkomponenten zu Blaukomponenten in der Farbaufnahme 107 abgeleiteten Binärbild vorliegenden, zusammenhängenden Regionen, welche chromatinhaltigen Objekten entsprechen, basierend auf einer Größe oder Form der zusammenhängenden Regionen, derjenigen zusammenhängenden Regionen, deren Größe oder Form einer vorbestimmten Bedingung entspricht; Extrahieren 202 eines Merkmalssatzes für jede der identifizierten zusammenhängenden Regionen aus der Farbaufnahme; und Klassifizieren 203 der identifizierten zusammenhängenden Regionen in zumindest zwei disjunkte Gruppen, basierend auf den extrahierten Merkmalssätzen für die identifizierten zusammenhängenden Regionen beschrieben; wobei die Farbaufnahme 107 zumindest einen Teilbereich eines dicken Blutausstrichs erfasst und bei dem die zu bestimmenden Objekte in dem dicken Blutausstrich vorliegende Plasmodien sind.

Bei dem Verfahren können ferner bei dem Schritt 202 des Merkmalssatzextrahierens die Merkmalssätze der identifizierten zusammenhängenden Regionen aus Ausschnitten der Farbaufnahme aufweisen, in welche die jeweiligen identifizierten zusammenhängenden Regionen liegen und auf diese zentriert sind, extrahiert werden, wobei eine Größe und Form der Ausschnitte für alle identifizierten zusammenhängenden Regionen identisch ist.

Das Verfahren kann ferner so ausgebildet sein, dass bei dem Schritt 203 des Klassifizierens die extrahierten Merkmalssätze mit Referenzmerkmalssätzen verglichen werden, um als ein Resultat des Vergleichs, jede identifizierte zusammenhängende Region zu genau einer der disjunkten Gruppen zuzuordnen.

Das Verfahren kann ferner vor dem Schritt 201 des Identifizierens einen Schritt 204 des Bereitstellens des Binärbildes aufweisen, basierend auf einem Grauwertbild der Aufnahme; wobei bei dem Schritt 204 des Bereitstellens des Binärbildes das Grauwertbild einer Filterung derart unterzogen werden kann, dass ein Kontrast zwischen Bereichen der Farbaufnahme in denen die zu bestimmenden Objekte liegen und Bereichen der Farbaufnahme in denen die zu bestimmenden Objekte nicht liegen, verstärkt wird, um als Ergebnis der Filterung ein gefiltertes Grauwertbild zu erhalten; und wobei bei dem Schritt 204 des Bereitstellens des Binärbildes ferner das gefilterte Grauwertbild unter Nutzung eines Schwellwertverfahrens in das Binärbild transformiert werden kann.

Das Verfahren kann ferner vor dem Schritt 204 des Bereitstellens des Binärbildes einen Schritt 205 des Bereitstellens des Grauwertbildes aufweisen, bei dem die Farbaufnahme basierend auf zumindest einem Grün-Kanal und einem Blau-Kanal in das Grauwertbild transformiert wird.

Das Verfahren kann ferner nach dem Schritt 203 des Klassifizierens einen Schritt 207 des Charakterisierens aller, einer ersten der beiden disjunkten Gruppen zugeordneten, identifizierten zusammenhängenden Regionen in eine Mehrzahl von disjunkten Charakterisierungsgruppen, basierend auf den extrahierten Merkmalssätzen für die identifizierten zusammenhängenden Regionen, aufweisen.

Das Verfahren kann ferner die Bestimmung von Plasmodien in einem dicken Blutausstrich mit dem Anfertigen eines dicken Blutausstrichs auf einem Objektträger aufweisen; mit einer Lokalisation 401 des dicken Blutausstrichs auf dem Objektträger; mit dem Anfertigen 402 einer Mehrzahl von Farbaufnahmen von dem dicken Blutausstrich, wobei jede der Farbaufnahmen zumindest einen Teilbereich des dicken Blutausstrichs erfasst; und mit der Bestimmung der in jeder Farbaufnahme vorliegenden Plasmodien unter Anwendung des Verfahrens für jede Farbaufnahme.

Das Verfahren kann ferner einen Schritt 402 des Anfertigens der Mehrzahl von Farbaufnahmen für jeden von einer Farbaufnahme erfassten Teilbereich des dicken Blutausstrichs mindestens drei Farbaufnahmen aufweisen, welche denselben Teilbereich erfassen, aber unterschiedliche Fokusebenen aufweisen.

Das Verfahren kann ferner nach dem Schritt des Bestimmens der in jeder Farbaufnahme vorliegenden Plasmodien einen Schritt des Anfertigens eines dünnen Blutausstrichs und des Bestimmens der in dem dünnen Blutausstrich vorliegenden Plasmodien aufweisen.

**Patentansprüche**

1. Vorrichtung zur Bestimmung von Objekten in einer Farbaufnahme (107), mit folgenden Merkmalen:

   einem Identifizierer (101), welcher ausgebildet ist, um aus einer Mehrzahl von in einem von der Farbaufnahme (107) basierend auf einem Verhältnis von Grünkomponenten zu Baukomponenten in der Farbaufnahme (107) abgeleiteten Binärbild (104) vorliegenden, zusammenhängenden Regionen, welche chromatinhaltigen Objekten entsprechen, basierend auf einer Größe oder einer Form der zusammenhängenden Regionen, die zusammenhängenden Regionen zu identifizieren, deren Größe oder Form einer vorbestimmten Bedingung entspricht;
   einem Merkmalsextrahierer (102) zum Extrahieren eines Merkmalssatzes (108) für jede der identifizierten zusammenhängenden Regionen aus der Farbaufnahme (107);
   einem Klassifizierer (103) zum Klassifizieren der identifizierten zusammenhängenden Regionen in zumindest zwei disjunkte Gruppen (109a, 109b), basierend auf den extrahierten Merkmalssätzen (108) für die identifizierten zusammenhängenden Regionen; und
   wobei die zu bestimmenden Objekte Plasmodien sind und die Farbaufnahme (107) ein Sichtfeld zumindest eines Teils eines dicken Blutausstrichs ist.

2. Vorrichtung gemäß Anspruch 1,
   bei der der Merkmalsextrahierer (102) ausgebildet ist, um die Merkmalssätze (108) der identifizierten zusammenhängenden Regionen aus Ausschnitten (5a bis 5e) der Farbaufnahme (107), in welchen sich die jeweiligen identifizierten zusammenhängenden Regionen befinden, zu extrahieren.

3. Vorrichtung gemäß Anspruch 2,
   bei der der Merkmalsextrahierer (102) so ausgebildet, dass eine Größe der Ausschnitte (5a bis 5e) für alle Ausschnitte (5a bis 5e) identisch ist und eine Fläche der Ausschnitte (5a bis 5e) mindestens einer größtmöglichen Fläche der zu bestimmenden Objekte entspricht, wobei die größtmögliche Fläche der zu bestimmenden Objekte durch die vorbestimmte Bedingung bestimmt ist.

4. Vorrichtung gemäß einem der Ansprüche 2 bis 3,
   bei der der Merkmalsextrahierer (102) so ausgebildet ist, dass die Ausschnitte (5a bis 5e) der Farbaufnahme (107) auf die jeweilige identifizierte zusammenhängende Region, die sich ihnen befindet, zentriert sind.

**5.** Vorrichtung gemäß einem der Ansprüche 1 bis 4,
bei der der Klassifizierer (103) ausgebildet ist, um die extrahierten Merkmalssätze (108) anhand von in einer Trainingsphase erhaltenen Referenzmerkmalssätzen und damit die identifizierten zusammenhängenden Regionen, für die die extrahierten Merkmalssätze extrahiert sind, zu einer der beiden disjunkten Gruppen (109a, 109b) zuzuordnen.

**6.** Vorrichtung gemäß einem der Ansprüche 1 bis 5,
ferner aufweisend einen Binärbildbereitsteller (113), welcher ausgebildet ist, um durch eine Farb-zu-Graustufenabbildung der Farbaufnahme (107) ein Grauwertbild (115) zu erzeugen, und aus dem Grauwertbild (115) das Binärbild (104) zu erzeugen.

**7.** Vorrichtung gemäß Anspruch 6,
bei der der Binärbildbereitsteller (113) ausgebildet ist, um in dem Binärbild (104) denjenigen Anteil, in welchem das Binärbild (104) einen vorbestimmten Binärwert aufweist, in voneinander getrennte, aber in sich zusammenhängende Regionen einzuteilen, die die Mehrzahl von zusammenhängenden Regionen darstellen, unter denen die Identifizierung durchgeführt wird.

**8.** Vorrichtung gemäß Anspruch 6 oder 7,
bei der der Binärbildbereitsteller (113) ausgebildet ist, um bei der Erzeugung des Binärbilds (104) aus dem Grauwertbild (115), das Grauwertbild (115) einer Hochpass-Filterung zu unterziehen, um als Ergebnis der Filterung ein gefiltertes Grauwertbild (119) zu erhalten, aus dem gefilterten Grauwertbild (119) einen Schwellwert zu bestimmen, und, basierend auf dem bestimmten Schwellwert aus dem verstärkten Grauwertbild (119) das Binärbild (104) zu erzeugen.

**9.** Vorrichtung gemäß Anspruch 8,
bei der der Binärbildbereitstellers (113) ausgebildet ist, um das Grauwertbild (115) einer "Black-Tophat"-Filterung zu unterziehen;
wobei eine Fläche eines "Black-Tophat"-Strukturelements derart gewählt wird, das diese mindestens einer größtmöglichen Fläche der zu bestimmenden Objekte entspricht, wobei die größtmögliche Fläche der zu bestimmenden Objekte durch die vorbestimmte Bedingung bestimmt ist

**10.** Vorrichtung gemäß einem der Ansprüche 1 bis 9,
bei der der Klassifizierer (103) die identifizierten zusammenhängenden Regionen so in die disjunkten Gruppen (109a, 109b) klassifiziert, dass die identifizierten zusammenhängenden Regionen, welche einer ersten Gruppe (109a) der disjunkten Gruppen (109a, 109b) zugeordnet sind, die in der Farbaufnahme (107) vorliegenden zu bestimmenden Objekte bilden.

**11.** Vorrichtung gemäß einem der Ansprüche 1 bis 10,
ferner aufweisend einen Charakterisierer (114), welcher ausgebildet ist, um alle einer ersten Gruppe (109a) der disjunkten Gruppen (109a, 109b) zugeordneten identifizierten zusammenhängenden Regionen in eine Mehrzahl von disjunkten Charakterisierungsgruppen (121a bis 121n), basierend auf den extrahierten Merkmalssätzen (108) für die identifizierten zusammenhängenden Regionen der ersten disjunkten Gruppe (109a), zu charakterisieren.

**12.** Verfahren zur Bestimmung von Objekten in einer Farbaufnahme (107) mit folgenden Schritten:

Identifizieren (201) aus einer Mehrzahl von, in einem von der Farbaufnahme basierend auf einem Verhältnis von Grünkomponenten zu Blaukomponenten in der Farbaufnahme (107) abgeleiteten Binärbild vorliegenden, zusammenhängenden Regionen, welche chromatinhaltigen Objekten entsprechen, basierend auf einer Größe oder Form der zusammenhängenden Regionen, derjenigen zusammenhängenden Regionen, deren Größe oder Form einer vorbestimmten Bedingung entspricht;
Extrahieren (202) eines Merkmalssatzes für jede der identifizierten zusammenhängenden Regionen aus der Farbaufnahme; und
Klassifizieren (203) der identifizierten zusammenhängenden Regionen in zumindest zwei disjunkte Gruppen, basierend auf den extrahierten Merkmalssätzen für die identifizierten zusammenhängenden Regionen;
wobei die Farbaufnahme (107) zumindest einen Teilbereich eines dicken Blutausstrichs erfasst und bei dem die zu bestimmenden Objekte in dem dicken Blutausstrich vorliegende Plasmodien sind.

**13.** Verfahren gemäß Anspruch 12,
das vor dem Schritt (201) des Identifizierens einen Schritt (204) des Bereitstellens des Binärbildes, basierend auf einem Grauwertbild der Aufnahme aufweist; und

wobei bei dem Schritt (204) des Bereitstellens des Binärbildes das Grauwertbild einer Filterung derart unterzogen wird, dass ein Kontrast zwischen Bereichen der Farbaufnahme in denen die zu bestimmenden Objekte liegen und Bereichen der Farbaufnahme in denen die zu bestimmenden Objekte nicht liegen, verstärkt wird, um als Ergebnis der Filterung ein gefiltertes Grauwertbild zu erhalten; und

wobei bei dem Schritt (204) des Bereitstellens des Binärbildes ferner das gefilterte Grauwertbild unter Nutzung eines Schwellwertverfahrens in das Binärbild transformiert wird.

**14.** Verfahren zur Bestimmung von Plasmodien in einem dicken Blutausstrich mit folgenden Schritten:

Anfertigen eines dicken Blutausstrichs auf einem Objektträger;
Lokalisation (401) des dicken Blutausstrichs auf dem Objektträger;
Anfertigen (402) einer Mehrzahl von Farbaufnahmen von dem dicken Blutausstrich, wobei jede der Farbaufnahmen zumindest einen Teilbereich des dicken Blutausstrichs erfasst; und
Bestimmung der in jeder Farbaufnahme vorliegenden Plasmodien unter Anwendung des Verfahrens gemäß einem der Ansprüche 12 bis 13 für jede Farbaufnahme.

**15.** Computerprogramm mit einem Programmcode zur Durchführung des Verfahrens nach einem der Ansprüche 12-14, wenn das Programm auf einem Computer abläuft.

**Claims**

**1.** A device for determining objects in a color recording (107), comprising:

an identifier (101) which is implemented to identify connected regions whose size or shape corresponds to a predetermined condition from a plurality of connected regions corresponding to chromatin-containing objects and existing in a binary image (104) derived from the color recording (107) based on a ratio of green components with respect to blue components in the color recording (107), based on a shape or a size of the connected regions;
a feature extractor (102) for extracting a feature set (108) for each of the identified connected regions from the color recording (107);
a classifier (103) for classifying the identified connected regions into at least two disjunct groups (109a, 109b) based on the extracted feature sets (108) for the identified connected regions; and
wherein the objects to be determined are plasmodia and the color recording (107) is a visual field of at least a part of a thick blood film.

**2.** The device according to claim 1,
wherein the feature extractor (102) is implemented to extract the feature sets (108) of the identified connected regions from sections (5a to 5e) of the color recording (107) in which the respective identified connected regions are located.

**3.** The device according to claim 2,
wherein the feature extractor (102) is implemented such that a size of the sections (5a to 5e) is identical for all sections (5a to 5e) and a surface of the sections (5a to 5e) corresponds at least to a largest possible surface of the objects to be determined, wherein the largest possible surface of the objects to be determined is determined by the predetermined condition.

**4.** The device according to one of claims 2 to 3,
wherein the feature extractor (102) is implemented such that the sections (5a to 5e) of the color recording (107) are centered to the respective identified connected region which is located within the same.

**5.** The device according to one of claims 1 to 4,
wherein the classifier (103) is implemented to allocate the extracted feature sets (108) to one of the two disjunct groups (109a, 109b) using reference feature sets received in a training phase and thus allocate the identified connected regions for which the extracted feature sets are extracted.

**6.** The device according to one of claims 1 to 5,
further comprising a binary image provider (113) which is implemented to generate a grayscale image (115) by a color-to-gray scale imaging of the color recording (107) and to generate the binary image (104) from the grayscale image (115).

7. The device according to claim 6,
   wherein the binary image provider (113) is implemented to divide the portion within the binary image (104) in which the binary image (104) comprises a predetermined binary value into separated but connected regions representing the plurality of connected regions among which the identification is executed.

8. The device according to claims 6 or 7,
   wherein the binary image provider (113) is implemented, in the generation of the binary image (104) from the grayscale image (115), to subject the grayscale image (115) to a high-pass filtering, to acquire a filtered grayscale image (119) as a result of filtering, determine a threshold value from the filtered grayscale image (119) and, based on the determined threshold value, generate the binary image (104) from the intensified grayscale image (119).

9. The device according to claim 8,
   wherein the binary image provider (113) is implemented to subject the grayscale image (115) to a "black top hat" filtering;
   wherein a surface of a "black top hat" structural element is selected such that the same corresponds to at least a largest possible surface of the objects to be determined, wherein the largest possible surface of the objects to be determined is determined by the predetermined condition.

10. The device according to one of claims 1 to 9,
    wherein the classifier (103) classifies the identified connected regions into the disjunct groups (109a, 109b) such that the identified connected regions which are associated with a first group (109a) of the disjunct groups (109a, 109b) form the objects to be determined existing in the color recording (107).

11. The device according to one of claims 1 to 10,
    further comprising a characterizer (114) which is implemented to characterize all identified connected regions associated with a first group (109a) of the disjunct groups (109a, 109b) into a plurality of disjunct characterization groups (121a to 121 n) based on the extracted feature sets (108) for the identified connected regions of the first disjunct group (109a).

12. A method for determining objects in a color recording (107), comprising:

    identifying (201) connected regions whose size or shape corresponds to a predetermined condition from a plurality of connected regions corresponding to chromatin-containing objects and existing in a binary image derived from the color recording based on a ratio of green components with respect to blue components in the color recording (107), based on a shape or a size of the connected regions;
    extracting (202) a feature set for each of the identified connected regions from the color recording; and
    classifying (203) the identified connected regions into at least two disjunct groups based on the extracted feature sets for the identified connected regions;
    wherein the color recording (107) detects at least a partial area of a thick blood film and wherein the objects to be determined are plasmodia existing in the thick blood film.

13. The method according to claim 12,
    comprising a step (204) of providing the binary image based on a grayscale image of the recording before the step (201) of identifying; and
    wherein in the step (204) of providing the binary image the grayscale image is subjected to filtering such that a contrast between areas of the color recording in which objects to be determined lie and areas of the color recording in which objects to be determined do not lie is intensified to acquire a filtered grayscale image as a result of filtering; and
    wherein in the step (204) of providing the binary image, further the filtered grayscale image is transformed into the binary image utilizing a threshold value method.

14. A method for determining plasmodia in a thick blood film, comprising:

    generating a thick blood film on an object carrier;
    localization (401) the thick blood film on the object carrier;
    making (402) a plurality of color recordings of the thick blood film, wherein each of the color recordings detects at least a partial area of the thick blood film; and
determining the plasmodia present in every color recording using the method according to one of claims 12 to 13 for each color recording.

15. A computer program having a program code for executing the method according to one of claims 12 to 14, when the program is executed on a computer.


**Revendications**

1. Dispositif pour déterminer des objets dans une image en couleur (107), aux caractéristiques suivantes:

   un identificateur (101) qui est conçu pour identifier, à partir d'une pluralité de régions contiguës présentes dans une image binaire (104) dérivée de l'image (107) sur base d'un rapport entre composantes vertes et composants bleues dans l'image en couleur (107), qui correspondent à des objets à teneur en chromatine, sur base d'une grandeur ou d'une forme des régions contiguës, les régions contiguës dont la grandeur ou la forme correspond à une condition prédéterminée;
   un extracteur de caractéristiques (102) destiné à extraire un ensemble de caractéristiques (108) pour chacune des régions contiguës identifiées à partir de l'image en couleur (107);
   un classificateur (103) destiné à classifier les régions contiguës identifiées dans au moins deux groupes disjoints (109a, 109b) sur base des ensembles de caractéristiques extraits (108) pour les régions contiguës identifiées; et
   dans lequel les objets à déterminer sont des plasmodies et l'image en couleur (107) est un champ de vision d'au moins une partie d'un frottis sanguin épais.

2. Dispositif selon la revendication 1,
   dans lequel l'extracteur de caractéristiques (102) est configuré pour extraire les ensembles de caractéristiques (108) des régions contiguës identifiées de segments (5a à 5e) de l'image en couleur (107) dans lesquels se trouvent les régions contiguës identifiées respectives.

3. Dispositif selon la revendication 2,
   dans lequel l'extracteur de caractéristiques (102) est conçu de sorte que la grandeur des segments (5a à 5e) soit identique pour tous les segments (5a à 5e) et qu'une surface des segments (5a à 5e) corresponde au moins à une surface la plus grande possible des objets à déterminer, la surface la plus grande possible des objets à déterminer étant déterminée par la condition prédéterminée.

4. Dispositif selon l'une des revendications 2 à 3,
   dans lequel l'extracteur de caractéristiques (102) est conçu de sorte que les segments (5a à 5e) de l'image en couleur (107) soient centrés sur la région identifiée contiguë qui se trouve dans cette dernière.

5. Dispositif selon l'une des revendications 1 à 4,
   dans lequel le classificateur (103) est conçu pour associer les ensembles de caractéristiques extraits (108), sur base d'ensembles de caractéristiques de référence obtenus au cours d'une phase d'apprentissage et, de ce fait, les régions contiguës identifiées pour lesquelles sont extraits les ensembles de caractéristiques à l'un des deux groupes disjoints (109a, 109b).

6. Dispositif selon l'une des revendications 1 à 5,
   comprenant par ailleurs un préparateur d'image binaire (113) qui est conçu pour générer, par une reproduction de niveau de couleur à gris de l'image en couleur (107), une image en niveau de gris (115) et pour générer, à partir de l'image en niveau de gris (115), l'image binaire (104).

7. Appareil selon la revendication 6,
   dans le préparateur d'image binaire (113) est conçu pour subdiviser dans l'image binaire (104) la part dans laquelle l'image binaire (104) présente une valeur binaire prédéterminée en régions séparées, mais contiguës entre elles, représentant la pluralité de régions contiguës parmi lesquelles est effectuée l'identification.

8. Dispositif selon la revendication 6 ou 7,
   dans lequel le préparateur d'image binaire (113) est conçu pour soumettre, lors de la génération de l'image binaire (104) à partir de l'image en niveaux de gris (115), l'image en niveaux de gris (115) à une filtration passe-haut, pour obtenir, comme résultat de filtration, une image en niveaux de gris filtrée (119), pour déterminer, à partir de l'image en niveaux de gris filtrée (119), une valeur de seuil, et pour générer à partir de l'image en niveaux de gris amplifiée (119), sur base de la valeur de seuil déterminée, l'image binaire (104).

**9.** Dispositif selon la revendication 8,
dans lequel le préparateur d'image binaire (113) est conçu pour soumettre l'image en niveaux de gris (115) à une filtration de "black tophat";
dans lequel une surface d'un élément de structure "black tophat" est choisi de sorte qu'il corresponde au moins à une surface la plus grande possible des objets à déterminer, la surface la plus grande possible des objets à déterminer étant déterminée par la condition prédéterminée.

**10.** Dispositif selon l'une des revendications 1 à 9,
dans lequel le classificateur (103) classifie les régions contiguës identifiées dans les groupes disjoints (109a, 109b) de sorte que les régions contiguës identifiées associées à un premier groupe (109a) des groupes disjoints (109a, 109b) constituent les objets à déterminer présents dans l'image en couleur (107).

**11.** Dispositif selon l'une des revendications 1 à 10, présentant par ailleurs un caractériseur (114) qui est conçu pour caractériser toutes les régions contiguës identifiées associées à un premier groupe (109a) des groupes disjoints (109a, 109b) en une pluralité de groupes de caractérisation disjoints (121a à 121 N) sur base des ensembles de caractéristiques extraits (108) pour les régions contiguës identifiées du premier groupe disjoint (109a).

**12.** Procédé pour déterminer des objets dans une image en couleur (107), comprenant les étapes suivantes consistant à:

identifier (201), à partir d'une pluralité de régions contiguës présentes dans une image binaire dérivée de l'image sur base d'un rapport entre composantes vertes et composants bleues dans l'image en couleur (107), qui correspondent à des objets à teneur en chromatine, sur base d'une grandeur ou d'une forme des régions contiguës, les régions contiguës dont la grandeur ou la forme correspond à une condition prédéterminée;
extraire (202) un ensemble de caractéristiques pour chacune des régions contiguës identifiées à partir de l'image en couleur; et
classifier (203) les régions contiguës identifiées dans au moins deux groupes disjoints sur base des ensembles de caractéristiques extraits pour les régions contiguës identifiées;
dans lequel l'image en couleur (107) saisit d'au moins une partie d'un frottis sanguin épais et dans lequel les objets à déterminer sont des plasmodies présentes dans le frottis sanguin épais.

**13.** Procédé selon la revendication 12,
présentant, avant l'étape (201) d'identification, une étape (204) consistant à préparer l'image binaire sur la base d'une image en niveaux de gris de l'image; et
dans lequel, à l'étape (204) de préparation de l'image binaire, l'image en niveaux de gris est soumise à une filtration, de sorte que soit amplifié un contraste entre les zones de l'image en couleur dans lesquelles se trouvent les objets à déterminer et les zones de l'image en couleur dans lesquelles ne se trouvent pas les objets à déterminer, pour obtenir, comme résultat de la filtration, une image en niveaux de gris filtrée; et
dans lequel, à l'étape (204) de préparation de l'image binaire, l'image en niveaux de gris filtrée est par ailleurs transformée en l'image binaire à l'aide d'un procédé à valeurs seuil.

**14.** Procédé pour déterminer des plasmodies dans un frottis sanguin épais, aux étapes suivantes consistant à:

préparer un frottis sanguin épais sur un porte-objet;
localiser (401) le frottis sanguin épais sur le porte-objet;
préparer (402) une pluralité d'images en couleur du frottis sanguin épais, chacune des images en couleur saisissant au moins une partie du frottis sanguin épais; et
déterminer les plasmodies présentes dans chaque image en couleur, à l'aide du procédé selon l'une des revendications 12 à 13 pour chaque image en couleur.

**15.** Programme d'ordinateur avec un code de programme pour réaliser le procédé selon l'une des revendications 12 à 14 lorsque le programme est exécuté sur un ordinateur.

FIGUR 1A

EP 2 656 277 B1

FIGUR 1B

<u>200</u>

```
┌─────────────────────────────────┐
│                                 │
│      Anfertigen der Farbaufnahme │──── 206
│                                 │
└─────────────────────────────────┘
                 │
                 ▼
┌─────────────────────────────────┐
│                                 │
│   Bereitstellen eines Grauwertbilds │──── 205
│                                 │
└─────────────────────────────────┘
                 │
                 ▼
┌─────────────────────────────────┐
│                                 │
│    Bereitstellen eines Binärbilds │──── 204
│                                 │
└─────────────────────────────────┘
                 │
                 ▼
┌─────────────────────────────────┐
│  Identifizieren von zusammenhängenden │──── 201
│             Regionen            │
└─────────────────────────────────┘
                 │
                 ▼
┌─────────────────────────────────┐
│ Extrahieren eines Mehrkanalsatzes für jede der │──── 202
│ identifizierten zusammenhängenden Regionen │
└─────────────────────────────────┘
                 │
                 ▼
┌─────────────────────────────────┐
│    Klassifizieren der identifizierten │──── 203
│     zusammenhängenden Regionen  │
└─────────────────────────────────┘
                 │
                 ▼
┌─────────────────────────────────┐
│ Charakterisierung aller einer ersten disjunkten │──── 207
│ Gruppe zugeordneten zusammenhängenden │
│             Regionen            │
└─────────────────────────────────┘
```

FIGUR 2

FIGUR 3

EP 2 656 277 B1

<u>400</u>

```
┌─────────────────────────────────────┐
│   Detektion des dicken Blutausstrichs │ ──── 401
│      auf dem Glasobjektträger         │
└─────────────────────────────────────┘
                  │
                  ▼
┌─────────────────────────────────────┐
│      Digitalisierung von mindestens   │ ──── 402
│   100 Sichtfeldern des dicken Blutausstrichs │
└─────────────────────────────────────┘
                  │
                  ▼
┌─────────────────────────────────────┐
│        Detektion von Plasmodien       │ ──── 403
└─────────────────────────────────────┘
                  │
                  ▼
┌─────────────────────────────────────┐
│       Reduktion von falsch-positiv    │ ──── 404
│        detektierten Plasmodien        │
└─────────────────────────────────────┘
                  │
                  ▼
┌─────────────────────────────────────┐
│      Optionale Charakterisierung der  │ ──── 405
│         detektierten Plasmodien       │
└─────────────────────────────────────┘
                  │
                  ▼
┌─────────────────────────────────────┐
│   Darstellung der detektierten Plasmodien │ ──── 406
│      auf dem Monitor und die manuelle │
│       Kontrolle durch den Anwender    │
└─────────────────────────────────────┘
```

# FIGUR 3

FIGUR 5A

FIGUR 5B

FIGUR 6A

FIGUR 6B

EP 2 656 277 B1

EP 2 656 277 B1

FIGUR 6C

119

FIGUR 6D

104

FIGUR 6F

FIGUR 6E

5c

**FIGUR 7A**

5e

**FIGUR 7B**

5b

**FIGUR 7C**

5d

**FIGUR 7D**

5a

**FIGUR 7E**

FIGUR 8

FIGUR 9

**FIGUR 10**

**FIGUR 11**

FIGUR 12

FIGUR 13

FIGUR 14

FIGUR 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03102210 A2
- US 20040241677 A1
- WO 2005121863 A1

**In der Beschreibung aufgeführte Nicht-Patentliteratur**

- Guidelines for the Treatment of Malaria. World Health Organization, 2010
- **F.B. TEK ; A.G. DEMPSTER ; I. KALE.** Computer vision for microscopy diagnosis of malaria. *Malaria Journal,* 2009, vol. 8 (1), 153
- World Health Organization. World malaria report 2009. WHO Press, 2009
- **G. DIAZ ; F.A. GONZALEZ ; E. ROMERO.** A semi-automatic method for quantification and classification of erythrocytes infected with malaria parasites in microscopic images. *J. of Biomedical Informatics,* 2009, vol. 42 (2), 296-307
- **ROSS, N. E. ; C. J. PRITCHARD ; D. L. RUBIN ; A. G. DUSE.** Automated image processing method for the diagnosis and classification of malaria on thin blood smears. *Medical and Biological Engineering and Computing,* 2006, vol. 44 (5), 427-436
- **LE, M.-T. ; T. R. BRETSCHNEIDER ; S. JUSS ; P. R. PREISER.** A novel semi-automatic imagine processing approach to determine Plasmodium falciparum parasitemia in Giemsa-stained thin blood smears. *BMC Cell Biol.,* 2008, vol. 9, 15
- **EDEN, M. ; J. E. GREEN ; A. SUN.** Feasibility of computer screening of blood films for the detection of malaria parasites. *Bull World Health Organ,* 1973, vol. 48 (2), 211-218
- **DEMPASTER, A. G ; C. DI RUBERTO.** Using granulometries in processing images of malarial blood. *Proc. IEEE International Symposium on Circuits and Systems ISCAS,* 06. Mai 2001, vol. 5, 291-294
- **RUBERTO, C. ; A. DEMPSTER ; S. KHAN ; B. JARRA.** Automatic thresholding of infected blood images using granulometry and regional extrema. *Proc. 15th International Conference on Pattern Recognition,* 03. September 2000, vol. 3, 441-444
- **DI RUBERTO, C. ; A. DEMPSTER ; S. KHAN ; B. JARRA.** Segmentation of blood images using morphological operators. *Proc. 15th International Conference on Pattern Recognition,* 03. September 2000, vol. 3, 397-400
- Morphological Image Processing for Evaluating Malaria Disease. **DI RUBERTO, C. ; A. DEMPSTER ; S. KHAN ; B. JARRA.** IWVF-4: Proceedings of the 4 th International Workshop on Visual Form. Springer Verlag, 2001, 739-748
- **DI RUBERTO, C. ; A. DEMPSTER ; S. KHAN ; B. JARRA.** Analysis of infected blood cell images using morphological operators. *Image and Vision Computing,* Februar 2002, vol. 20 (2), 133-146
- **HALIM, S. ; T. R. BRETSCHNEIDER ; Y. LI ; P. R. PREISER ; C. KUSS.** Estimating Malaria Parasitaemia from Blood Smear Images. *Proc. 9 th International Conference on Control, Automation, Robotics and Vision ICARCV,* 05. Dezember 2006, vol. 06, 1-6
- **TEK, F. B. ; A. G. DEMPSTER ; I. KALE.** Malaria parasite detection in peripheral blood images. *British Machine Vision Conference 2006 (BMVC2006),* 2006, 347-356
- **OTSU, N.** A threshold selection method from gray level histograms. *IEEE Trans. Systems, Man and Cybernetics,* 1979, vol. 9, 62-66
- **M. HU.** Visual pattern recognition by moment invariants. *IRE Trans. On Information Theory, IT-8,* 1962, 179-187
- **A. KHOTANZAD ; Y. H. HONGS.** Invariant image recognition by zernike moments. *IEEE Transactions on Pattern Analysis and Machine Intelligence,* 1990, vol. 12 (5), 489-497
- **R. M. HARALICK ; K. SHAMMUGAM ; I. DINSTEIN.** Textural features for image classification. *IEEE Transactions on Systems, Man, and Cybertinetics,* 1973, vol. 3 (6), 610-621
- **M. UNSER.** Sum and difference histograms for texture classification. *IEEE Trans. Pattern Anal. Mach. Intell.,* 1986, vol. 8 (1), 118-125
- **Y. Q. CHEN ; M. S. NIXON ; D. W. THOMAS.** Statistical geometric features for texture classification. *Pattern Recognition,* 1995, vol. 28 (4), 537-552
- **I. T. YOUNG ; P. W. VERBEEK ; B. H. MAYALL.** Characterization of chromatin distribution in cell nuclei. *Cytometry,* 1986, vol. 7 (5), 467-474

- Robust recognition of white blood cell images. **V. KOVALEV ; A. Y. GRIGORIEV ; H.-S. AHN.** ICPR ,96: Proceedings of the International Conference on Pattern Recognition (ICPR ,96). IEEE Computer Society, 1996, vol. 7472, 371

- Genetic algorithms a tool for feature selection in machine learning. **H. VAFAIE ; K. D. JONG.** Proceedings of the 4th International Conference on Tools with Artificial Intelligence. IEEE Computer Society Press, 1992, 200-204